# EUROPEAN PATENT SPECIFICATION

(11) **EP 3 404 655 B1**
(45) Date of publication and mention of the grant of the patent: **23.09.2020**
(21) Application number: 18173291.8
(22) Date of filing: 18.05.2018
(51) Int. Cl.: G10L 15/30, H04L 12/28, G10L 15/08, G10L 15/22

(54) **HOME APPLIANCE AND METHOD FOR OPERATING THE SAME**
HAUSHALTSGERÄT UND VERFAHREN ZUM BETRIEB DAVON
APPAREIL DOMESTIQUE ET SON PROCÉDÉ DE FONCTIONNEMENT

(30) Priority: 19.05.2017 KR 20170062481
(43) Date of publication of application: 21.11.2018
(73) Proprietor: LG Electronics Inc., Seoul 07336 (KR)
(72) Inventor: KWON, Mingu, 08592 Seoul (KR); KIM, Sunghak, 08592 Seoul (KR); SHIN, Kyuyeol, 08592 Seoul (KR); OH, Jeongkyu, 08592 Seoul (KR); YIM, Taehyeong, 08592 Seoul (KR); HAN, Dongwoo, 08592 Seoul (KR)
(74) Representative: Vossius & Partner Patentanwälte Rechtsanwälte mbB

(56) References cited:
- US-A1- 2005 091 057
- US-A1- 2007 129 949
- US-A1- 2007 276 651
- US-A1- 2014 163 978
- US-A1- 2016 055 847
- US-A1- 2016 140 960

## Description

This application claims the priority benefit of Korean Patent Application No. 10-2017-0062481, filed on May 19, 2017 in the Korean Intellectual Property Office.

The present invention relates to a home appliance and a method for operating the same and, more specifically, to a home appliance capable of being controlled by a user's voice command in the form of a natural language and a method for operating the home appliance.

Air conditioners, washing machines, cleaners, and other home appliances used in a specific space, for examples, at home or at an office, perform distinct functions and operations upon a user's manipulation.

For example, an air conditioner comprises a compressor for compressing a refrigerant, a condenser for condensing the compressed refrigerant, an expansion valve for expanding the condensed refrigerant, and an evaporator for exchanging heat of the expanded refrigerant with indoor air. The air conditioner is used to heat or cool down an indoor space so as to adjust an indoor temperature.

In addition, a refrigerant stores foods, a washing machine washes laundry, a cleaner performs cleaning functions, and a cooking appliance is used to cook food.

To operate a home appliance, such as the air conditioner, a user needs to manipulate buttons provided in a main body of the home appliance or use a remote control device, such as a remote controller.

However, even when using a remote controller, the user needs to select and push a key of a desired function. Thus, if the user is in a dark indoor space, additional lighting is necessary for the user to see the remote controller and its keys.

Under this background, there are increasing efforts to study and investigate the way of controlling a home appliance based on voice recognition.

US 2014/163978 A1 refers to a method, according to which, if an audio input obtained by the computing device includes a keyword, a network interface module and/or an application processing module of the computing device may be activated. The audio input may then be transmitted via the network interface module to a remote computing device, such as a speech recognition server. US 2016/055847 A1 refers to a system and method for validating a wake-up-word.

In Related Art 1 (Korean Patent Application Publication No. 10-1999-00069703), a remote controller for an air conditioner comprises a voice input unit and a signal processing unit to generate and transmit a manipulation signal in response to voice recognition.

Related art 2 (Korean Patent Application Publication No. 10-2006-0015092) discloses: converting an input voice signal into a digital signal and a text; checking if a coinciding control command is stored in a database; if the coinciding control command is stored, controlling each device of an air conditioner; and, if the coinciding control command is not stored, extracting a keyword and controlling each device of the air conditioner in accordance with a control command associated with the keyword.

However, there are limitations in system resources that each apparatus, such as a remote controller and an air conditioner, is able to provide. In particular, in order to recognize natural language, not just few simple words, a great amount of computation is required, which cannot be implemented by a module embedded in an individual apparatus.

Voice recognition techniques disclosed in Related art 1 and Related art 2 have limitations in recognizing and processing voice commands which are input in the form of various natural languages by users across the world.

Thus, there is need of an improved method for recognizing natural language.

Particularly, there is need of a method for recognizing natural language, without a limitation to system resources of an individual apparatus, and for controlling a home appliance conveniently.

Particularly, a voice recognition method which minimizes the probability of false recognition occurring in a procedure of recognizing and processing a user's voice command in order to minimize the user's discomfort is needed.

### [Related art documents]

(Patent document 1) 1. Korean Patent Application Publication No. 10-1999-00069703 (Published on September 6, 1999)
(Patent document 2) 2. Korean Patent Application Publication No. 10-2006-0015092 (Published on February 18, 2006)

### SUMMARY OF THE INVENTION

An object of the present invention is to provide a voice recognition method for recognizing and processing natural language efficiently, and a voice recognition system.

Particularly, another object of the present invention is to provide a home appliance capable of being controlled by a user's voice command, and a method for operating the same.

Particularly, yet another object of the present invention is to provide a voice recognition method for minimizing a probability of false recognition, which possibly occurs in a voice recognition process and a home appliance control process, in order to minimize a user's discomfort and increase reliability and convenience.

The objects of the invention are achieved by the independent claims. Dependent claims refer to preferred embodiments.

The invention is defined by the appended independent claims. In one general aspect, the above and other objects can be accomplished by the provision of a method according to claim 1.

In another general aspect, the above and other objects can be accomplished by the provision of a home appliance according to claim 9.

Preferably, the method comprises, when the received analysis result information comprises information indicating that the voice signal does not comprise the call word, return to the wake-up signal standby mode.

Preferably, the method comprises, when the voice signal does not comprise the call word, returning to the wake-up signal standby mode.

Preferably, the method comprises receiving the voice command via the audio input unit.

Preferably, the method comprises transmitting voice data, comprising the voice command, to the voice recognition server system.

Preferably, the method comprises receiving the voice command via the audio input unit.

Preferably, the method comprises, when the voice command received for the preset period of time corresponds to a pre-stored keyword command, performing an operation corresponding to the pre-stored keyword command.

Preferably, the method comprises, when the voice command received for the preset period of time corresponds to a pre-stored keyword command, performing an operation corresponding to the keyword command.

Preferably, the method comprises, when the voice command received for the preset period of time does not correspond to a pre-stored keyword command, transmitting voice data, comprising the voice command, to the voice recognition server system.

Preferably, the method comprises, when the voice command is not received within the preset period of time, switching to the wake-up signal standby mode.

Preferably, the method comprises, when a control signal based on the voice command is received from the voice recognition server system, performing an operation corresponding to the received control signal. According to the invention, the method comprises, when a response signal based on the voice command is received from the voice recognition server system, outputting an audible guidance message corresponding to the received response signal.

Preferably, the method comprises, when a signal corresponding to a voice recognition failure is received from the voice recognition server system, outputting an audible guidance message to request re-inputting of the voice command.

Preferably, the method comprises, when a signal corresponding to a voice recognition failure is received from the voice recognition server system, switching to the command standby mode.

Preferably, the method comprises, when a signal for notifying that the voice command is about an unsupported function is received from the voice recognition server system, outputting an audible guidance message for notifying that the voice command is about the unsupported function.

Preferably, the home appliance comprises that, when the received analysis result information comprises information indicating that the voice does not comprise the call word, the controller is configured to perform control to switch to a wake-up signal standby mode for receiving a wake-up voice signal comprising the preset call word.

Preferably, the home appliance is configured to, when the voice signal does not comprise the call word, switch to the wake-up signal standby mode.

Preferably, the home appliance comprises a memory being configured to store a call word determination algorithm for determining whether the voice signal comprises the call word.

Preferably, the home appliance comprises that the controller is configured to determine, based on the call word determination algorithm, whether the voice signal comprises the call word.

Preferably, the home appliance comprises, when a voice command is received via the audio input unit, that the controller is configured to control the communication unit to transmit voice data comprising the voice command, to the voice recognition server system.

According to the invention is provided that the user does not need to manipulate a remote controller for which reason the user's convenience is improved.

Furthermore, it is possible to recognize and process natural language efficiently.

In addition, it is possible to minimize a probability of false recognition, which could occur in a voice recognition process and a home appliance control process, thereby minimizing a user's discomfort and increasing reliability of the voice recognition.

Meanwhile, any other effects will be directly and implicitly described below in the description of the embodiment.

### BRIEF DESCRIPTION OF THE DRAWINGS

The embodiments will be described in detail with reference to the following drawings in which like reference numerals refer to like elements wherein:
FIG. 1 is a diagram schematically illustrating a smart home system including a voice recognition server system and a home appliance according to an embodiment of the present invention;
FIG. 2 is a diagram illustrating various examples of a home appliance;
FIG. 3A shows an example of a voice recognition server system according to an embodiment of the present invention;
FIG. 3B shows an example of a voice recognition server system according to an embodiment of the present invention;
FIGS. 4 to 6 are diagrams illustrating an example of a signal flow in a voice recognition server system, the example not representing an embodiment of the present invention;
FIGS. 7 to 9 are diagrams illustrating an example of a signal flow in a voice recognition server system according to an embodiment of the present invention;
FIG. 10 is a block diagram illustrating an example of a server according to an embodiment of the present invention;
FIG. 11 is a block diagram illustrating an example of a home appliance according to an embodiment of the present invention;
FIG. 12 is a block diagram illustrating an example of an air conditioner according to an embodiment of the present invention;
FIGS. 13 and 14 are views schematically showing an exterior of an air conditioner according to an embodiment of the present invention;
FIG. 15 is a flowchart illustrating a method for operating a home appliance according to an embodiment of the present invention;
FIG. 16 is a flowchart illustrating a smart home system including a voice recognition server system and a home appliance according to an embodiment of the present invention;
FIGS. 17 and 18 are diagrams for explaining information that is provided by a home appliance in a voice recognition and control process according to an embodiment of the present invention;
FIG. 19 is a diagram illustrating feedback operations performed when a home appliance is implemented as a home appliance according to an embodiment of the present invention;
FIG. 20 is a flowchart illustrating a method for operating a home appliance according to an embodiment of the present invention;
FIG. 21 is a diagram illustrating an example of a signal flow in a home appliance and a voice recognition server system according to an embodiment of the present invention;
FIGS. 22 to 24 are sketches for explaining various operations of a voice recognition server system and a home appliance according to an embodiment of the present invention;
FIG. 25 is a block diagram illustrating another example of a home appliance according to an embodiment of the present invention;
FIG. 26 is a block diagram illustrating an example of a driving unit shown in FIG. 11 and 25;
FIG. 27 shows an example of a circuit diagram of a motor driving device shown in FIG. 26; and
FIG. 28 is a block diagram illustrating an inverter controller shown in FIG. 27.

### DETAILED DESCRIPTION OF THE EMBODIMENTS

Hereinafter, embodiments of the present invention will be described in detail with reference to the accompanying drawings. While the invention will be described in conjunction with exemplary embodiments, it will be understood that the present description is not intended to limit the invention to the exemplary embodiments.

In the drawings, in order to clearly and briefly describe the invention, parts which are not related to the description will be omitted and, like reference numerals refer to like elements throughout.

In the following description, with respect to constituent elements used in the following description, the suffixes "module" and "unit" are used or combined with each other only in consideration of ease in the preparation of the specification, and do not have or serve as different meanings. Accordingly, the suffixes "module" and "unit" may be interchanged with each other.

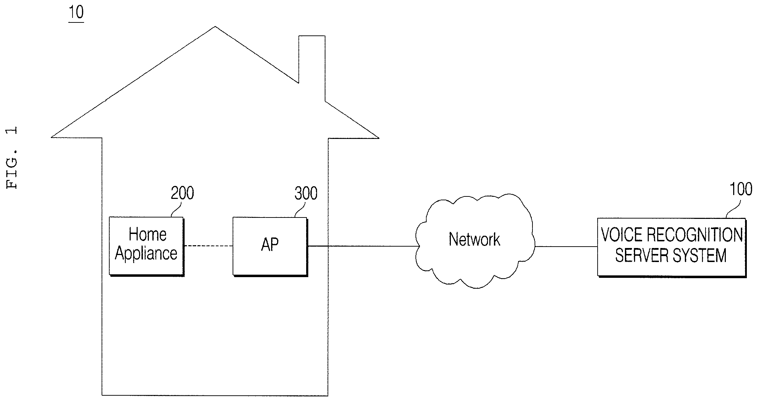

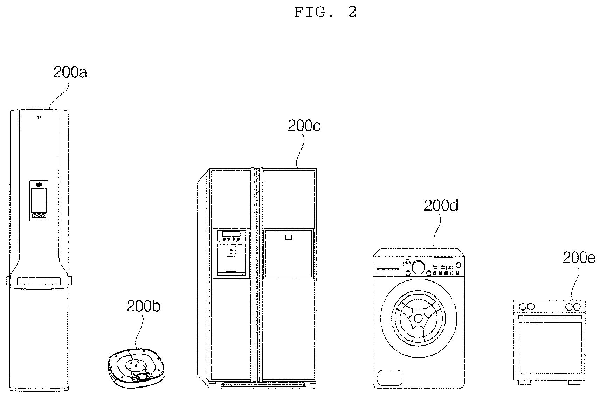

FIG. 1 is a diagram schematically illustrating a smart home system including a voice recognition system and a home appliance according to an embodiment of the present invention, and FIG. 2 is a diagram illustrating examples of a home appliance.

Referring to FIG. 1, a smart home system 10 according to an embodiment of the present invention may be composed of a home appliance 200, which comprises a communication module (not shown) to communicate with another device or access a network; and a voice recognition server system 100, which comprises a plurality of servers for voice recognition and control of home appliances.

Referring to 2, the home appliance 200 may be an air conditioner 200a, a robot cleaner 200b, a refrigerator 200c, a washing machine 200d, a cooking appliance 200e, etc.

In addition, the smart home system 10 according to an embodiment of the present invention may comprise a mobile terminal (not shown), such as a smart phone and a tablet PC.

The home appliance 200 comprises a communication module inside to communicate with electronic devices inside/outside the smart home system 10.

The smart home system 10 according to an embodiment of the present invention may further comprise an access point (AP) device 300, and the home appliance 200 may be configured to access a wireless internet network via the access point device 300 to communicate with other devices.

The AP device 300 may be configured to allocate a wireless channel to electronic devices located in the smart phone system 10 according to a specific communication scheme, and to perform wireless data communication via the corresponding channel.

The specific communication scheme may be a Wi-Fi communication scheme. In response, a communication module comprised in the home appliance 200 may be a Wi-Fi communication module, but aspects of the present invention are not limited thereto.

Alternatively, the home appliance 200 may comprise a different type of communication module or a plurality of communication modules. For example, the home appliance 200 may comprise a near field communication (NFC) module, a zigbee communication module, a bluetooth communication module, etc.

The home appliance 200 may be connected, using a Wi-Fi communication module, to a server comprised in the voice recognition server system, an external server, or a user's mobile terminal, and may be configured to support smart functions such as remote monitoring and remote controlling.

Using the mobile terminal, the user may check information about the home appliance in the smart home system 10 or may control the home appliance 200.

Meanwhile, even when wishing to control the home appliance 200 or check specific information at home, the user needs to use the mobile terminal and this may be inconvenient.

For example, if the user does not know where the mobile terminal is now or if the mobile terminal is in a different place, it is more efficient to have another means for controlling the home appliance 200 in a different way.

The home appliance 200 is configured to receive a user's voice input, and the voice recognition server system 100 is configured to recognize and to analyze the user's voice input to control the home appliance 200.

Accordingly, the user is able to control the home appliance 200 even without manipulating a mobile terminal, a remote control device, or the like.

Meanwhile, at least some of servers comprised in the voice recognition server system 100 may be server operated by a manufacturing or selling company of a corresponding home appliance or a server operated by a firm commissioned from the manufacturing or selling company.

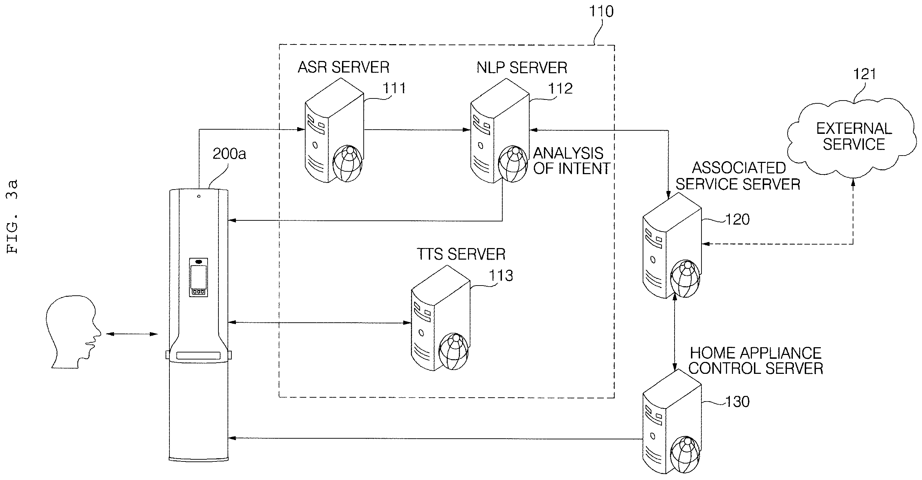

FIG. 3A shows an example of a voice recognition server system according to an embodiment of the present invention.

Referring to FIG. 3A, a voice recognition server system according to an embodiment of the present invention may comprise a voice server 110, which is configured to receive voice data from the home appliance 200 and to determine a voice command by analyzing the received voice data.

The voice server 110 may be configured to receive voice data from the home appliance 200, to convert the received voice data into text data, and to analyze the text data so as to determine a voice command.

In addition, the voice server 110 may be configured to transmit a signal corresponding to the determined voice command to a specific server.

For example, the voice recognition server system according to an embodiment of the present invention may comprise a home appliance control server 130. The home appliance control server 130 may receive the signal corresponding to the determined voice command from the voice server 110, and transmit a control signal, which is based on a request signal from an association service server 120 generating a request signal corresponding to the determined voice command, to the home appliance 200.

The home appliance 200 may be configured to receive a voice command input spoken by a user, and to transmit voice data based on the received voice command input to the voice server 110.

The voice server 110 may comprise an Automatic Speech Recognition (ASR) server 111 configured to receive voice data from the home appliance 200 and to convert the received voice data into text data; a Natural Language Processing (NLP) server 112 configured to receive the text data from the ASR server 111, and to determine a voice command by analyzing the received text data, and to transmit a response signal based on the determined voice command to the home appliance 200; and a Text to Speech (TTS) server 113 configured to receive a signal including a text corresponding to the response signal from the home appliance 200, to convert the text comprised in the received signal into voice data, and to transmit the voice data to the home appliance 200.

The ASR server 111 may be configured to generate text data by performing voice recognition on voice data received from the home appliance 200, and to transmit the text data to the NLP server 112.

The NLP server 122 may be configured to determine a voice command by analyzing the text data received from the ASR server 111 according to a natural language processing algorithm.

The NLP server 112 may be configured to process natural language, commonly used by humans, according to the natural language processing algorithm and analyze the text data in order to determine an intent of the user. The NLP server 112 may be configured to determine a voice command coinciding with the user's intent, by performing natural language processing on text data received from the ASR server 111.

Accordingly, even though a user inputs a voice command with a commonly used language, the NLP server 112 may determine a voice command that coincides with the user's intent.

The NLP server 112 may transmit a signal corresponding to a result of natural language processing, that is, a signal corresponding to the determined voice command, to the associated service server 120.

The associated service server 120 may receive the signal corresponding to the determined voice command from the NLP server 112.

When the determined voice command refers to an action to be performed by the home appliance 200, the associated service server 120 may perform an operation corresponding to the determined voice command by communicating with the home appliance control server 130.

Alternatively, when the determined voice command does not refer to an action to be performed by the home appliance 200, the associated service server 120 may be configured to perform an operation corresponding to the determined voice command by communicating with the external service 121.

For example, when the determined voice command is a command for requesting information on weather, stock, news, or the like, the associated service server 120 may request the requested corresponding information from a server which provides services corresponding to the requested information, and receive the requested information from the server.

In addition, the associated service server 120 may be configured to transmit the received information to the voice server 110, and the NLP server 112 may be configured to transmit received information to the home appliance 200.

When the determined voice command refers to an action to be performed by the home appliance 200, the associated service server 120 may be configured to generate a request signal corresponding to the determined voice command and to transmit the request signal to the home appliance control server 130.

The home appliance control server 130 may be configured to transmit a control signal, which is based on the request signal received from the associated service server 120, to the home appliance 200.

For example, when a request for changing a temperature set in the air conditioner 200a is received, the home appliance control server 130 may transmit a control signal for changing the set temperature to the air conditioner 200a.

Meanwhile, the home appliance 200 may be configured to perform a corresponding operation in accordance with the control signal received from the home appliance control server 130.

In addition, after performing a requested operation, the home appliance 200 may be configured to transmit a signal indicative of completion of the requested operation to the home appliance control server 130.

In addition, the home appliance control server 130 may be configured to receive a response signal from the home appliance 200 in response to the control signal, and to transmit processing result information corresponding to the response signal to the associated service server 120.

The voice server 110 may be configured to transmit the response signal, including the processing result information, to the home appliance 200.

The voice server 110 may be configured to receive a signal, including an output text corresponding to the processing result information, from the home appliance 200, to convert the received output text into voice data, and to transmit the voice data to the home appliance 200.

In this case, the response signal transmitted by the NLP server 112 to the home appliance 200 based on the determined voice command may comprise the processing result information.

Meanwhile, the home appliance 200 may be configured to receive a response signal, which is based on the determined voice command, from the NLP server 112. The response signal may comprise text data corresponding to the determined voice command.

For example, a user inputs a voice command for changing a setting of a temperature of an air conditioner 200a, the response signal may comprise text data indicating that the setting of the temperature has been changed.

Meanwhile, the home appliance 200 may be configured to transmit a signal including a text corresponding to the received response signal to the TTS server 113. The signal including a text corresponding to the response signal may comprise an output text corresponding to the processing result information.

Meanwhile, the TTS server 113 may be configured to convert the text comprised in the received signal into voice data, and to transmit the voice data to the home appliance 200. The voice data may comprise a source audio file.

The home appliance 200 may be configured to output, through a speaker, an audible guidance message which is based on the received voice data.

Meanwhile, the associated service server 120 may be configured to request state information of the home appliance 200 from the home appliance control server 130 based on a signal corresponding to the determined voice command. The home appliance control server 130 may be configured to transmit the state information of the home appliance 200 to the associated service server 120. When the state information of the home appliance 200 is not secured, the home appliance control server 130 may be configured to request and receive the state information from the home appliance 200.

Meanwhile, when the determined voice command is supported based on the state information of the home appliance 200, the associated service server 120 may be configured to transmit a request signal corresponding to the determined voice command to the home appliance control server 130.

Alternatively, when the determined voice command is not supported based on the state information of the home appliance 200, the associated service server 120 may be configured to transmit, to the NLP server 112, a signal for notifying that the determined voice command is about a function not being supported in the current state.

Even in this case, the home appliance 200 may be configured to request and receive voice data from the TTS server 113, and to output an audible guidance message for notifying that the determined voice command is a function not being supported in the current state.

In some implementations, the voice server 110 may be configured to determine whether or not the determined voice command is supported. For example, the NLP server 112 having analyzed the intent of the user's voice command may determine whether or not the determined voice command is supported.

In this case, if the determined voice command comprises an unsupported command, a response signal based on the determined voice command, the signal which is transmitted by the NLP server 112, may be a signal indicating that the determined voice command is a function not supported by the home appliance 200.

The voice server 110 according to an embodiment of the present invention, and the voice recognition server system 100 including the voice server 110 may be configured to connect and use servers which perform various functions of natural-language voice processing.

The home appliance 200 may be configured to perform operations from receiving and pre-processing of a voice command to transmit the voice command to a server, and the voice server 100 may be configured to perform natural language processing operations such as conversion of a voice/text, analysis of an intent, identification of a command, etc.

As the voice server 110 performs natural-language processing, this may reduce the burden on a CPU of an embedded module and a memory in the home appliance 200.

Meanwhile, the associated service server 120 may be configured to perform an operation based on a user's voice command by communicating with an external service server or a home appliance control server 130.

Meanwhile, according to the invention, the home appliance 200 is configured to receive voice data including an audio file from the voice server 110 and to output an audible guidance message so as to provide an audible feedback in response to a user's voice input.

The home appliance 200 may be configured to receive a voice file via streaming media, and to playback or to output an audible guidance message to a user. Accordingly, the home appliance 200 does not need to store diverse audio files.

Meanwhile, via the associated service server 120, it is possible to be associated with various external services without colliding with other servers. In addition, using the external service associated server, an intention analysis rate may be enhanced by reflecting external information during intent analysis.

The voice recognition server system 100 according to an embodiment of the present invention may be configured to secure compatibility and connectivity using a plurality of servers. In addition, using the home appliance control server 130, a final control command may prevent a collision between a voice recognition process and a home appliance controlling process performed by the home appliance control server 130 through Wi-Fi communication, and a collision between a home appliance controlling processing through a mobile terminal and a home appliance controlling process upon a voice input through the home appliance 200.

The voice recognition server system 100 according to an embodiment of the present invention may reduce the problem that loads are focused on one specific server, through organic connection of servers. Each server performs a different function, and thus, when a problem occurs in a specific server, it is possible to address the problem by associating with a different server which performs the same function.

In addition, a plurality of servers may be updated independently from time to time, and it is advantageous in improving performance.

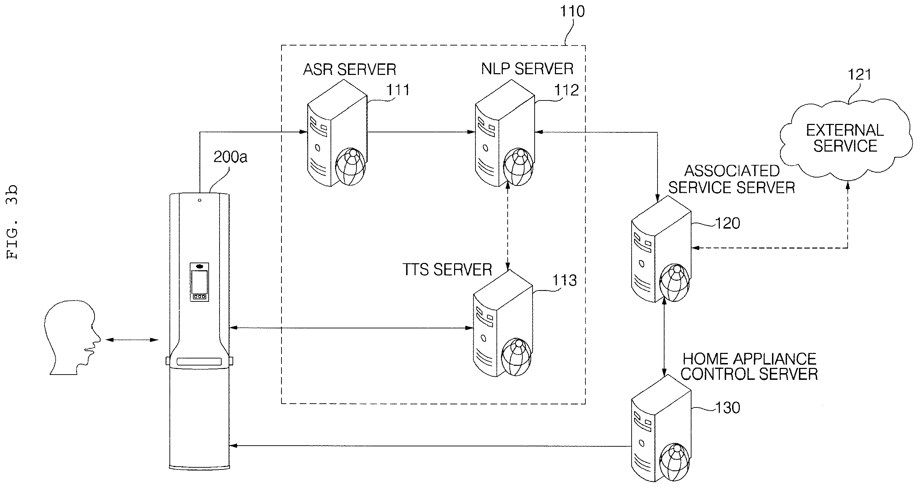

FIG. 3B shows an example of a voice recognition server system according to an embodiment of the present invention.

The voice recognition server system shown in FIG. 3B is an example of the voice recognition server system shown in FIG.3A of which a process of transmitting voice data for outputting of an audible guidance message to the home appliance 200 has improved to reduce a voice control response time.

Thus, the voice recognition server systems shown in FIGS. 3A and 3B may be configured to perform other operations substantially in the same way, and only the distinguishing parts between the two systems will be briefly described.

Referring to FIG. 3B, a voice recognition server system according to an embodiment of the present invention may comprise a voice server 110 configured to receive voice data from a home appliance 200 and to analyze the received voice data to determine a voice command.

In addition, the voice recognition server system according to an embodiment of the present invention may comprise an associated service server 120 configured to transmit a signal corresponding to the determined voice command from the voice server 110, and to generate a request signal corresponding to the determined voice command; and a home appliance control server 130 configured to transmit, to the home appliance 200, a control signal which is based on the request signal received from the associated service server 120.

The voice recognition server system shown in FIG. 3B is able to transmit voice data, including processing result information which is based on the voice command, to the home appliance 200 even without a request from the home appliance 200.

The voice server 110 may comprise an ASR server 111 configured to receive voice data from the home appliance 200 and to convert the received voice data into text data; a NLP server 112 configured to receive the text data from the ASR server 111 and to analyze the received text data to determine a voice command; and a TTS server 113 configured to convert a response signal based on the voice command into voice data and transit the voice data to the home appliance 200.

In this embodiment, the home appliance control server 130 may be configured to receive a response signal from the home appliance 200 in response to the control signal, and to transmit processing result information corresponding to the response signal to the associated service server 120.

The associated service server 120 may be configured to transmit the processing result information to the voice server 110, especially, to the NLP server 112.

In this case, the voice data transmitted by the TTS server 113 to the home appliance 200 may comprise the processing result information.

In addition, the associated service server 120 may be configured to request state information of the home appliance 200 from the home appliance control server 130 based on a signal corresponding to the determined voice signal, and the home appliance control server 130 may be configured to transmit the state information of the home appliance 200 to the associated service server 120.

In addition, when the determined voice command is supportable based on the state information of the home appliance 200, the associated service server 120 may be configured to transmit a request signal corresponding to the determined voice command to the home appliance control server 130.

Alternatively, when the determined voice command is not supported based on the state information of the home appliance 200, the associated service server 120 may be configured to transmit, to the voice server 110, a signal for notifying that the determined voice command is a function not supported in the current state.

For example, the associated service server 120 may be configured to transmit, to the NLP server 112, a signal for notifying that the determined voice command is about a function not supported in the current state.

In addition, the NLP server 112 may be configured to transmit, to the TTS server 113, a signal for notifying that the determined voice command is about a function not supported in the current state, and the TTS server 113 may be configured to generate corresponding voice data and to transmit the voice data to the home appliance 200.

The home appliance 200 may be configured to receive the voice data from the TTS server 113, and to output an audible guidance message for notifying that the determined voice command is about a function not supported in the current state.

In some implementations, the voice server 110 may be configured to determine whether or not the determined voice command is supported. For example, the NLP server 112 having analyzed an intent of a user's voice command may be configured to determine whether the determined voice command is supported.

In this case, if the determined voice command comprises an unsupported command, a response signal based on the determined voice command, the signal which is transmitted by the NLP server 112, may be a signal indicating that the determined voice command is a function not being supported by the home appliance 200.

If the home appliance 200 operates first and then requests audible guidance about a corresponding operation from the TTS server 113. In the last stage, there may be a time gap between performing of the corresponding operation and outputting of the audible guidance.

However, according to an embodiment of the present invention, at a time when an operation request is transmitted from the NLP server 112 after completion of intent analysis, information may be simultaneously provided to the TTS server 113.

In addition, around when the home appliance control server 130 transmits a control command to the home appliance 200, the TTS server 113 may provide an audible comment to the home appliance 200.

Accordingly, the audible comment may be output at the same time when or right after operation of the home appliance 200.

According to this embodiment, by connecting the NLP server 112 and the TTS server 113 directly, it is possible to reduce an interval between outputting of a control command and outputting of the audible comment via the home appliance control server 130.

Meanwhile, although the air conditioner 200a is described with reference to FIGS. 3A and 3B as an example of the home appliance 200, aspects of the present invention are not limited. For example, the home appliance 200 may be the robot cleaner 200b, the refrigerator 200c, the washing machine 200d, the cooking appliance 200e, etc., in addition to the air conditioner 200a.

According to one aspect of the present invention, unlike the examples shown in FIGS. 3A and 3B, the ASR server 111, the NLP server 112, and the TTS server 113 for voice recognition and processing may be configured as one integrated server.

In addition, in some implementations, the associated service server 120 and the home appliance control server 130 may be configured as one integrated server.

According to the present invention, the home appliance 200 operates upon a voice input, and thus, a user does not need to manipulate a remote control device, such as a remote controller, or a mobile terminal. Thereby, the user convenience is improved.

In addition, as described above with reference to FIGS. 3A and 3B, the method and the home appliance 200 according to the present invention is configured to recognize a user's natural-language voice command and to perform a corresponding control operation, thereby enabled to recognize and process natural language without a limitation to system resources of the home appliance 200 and each server.

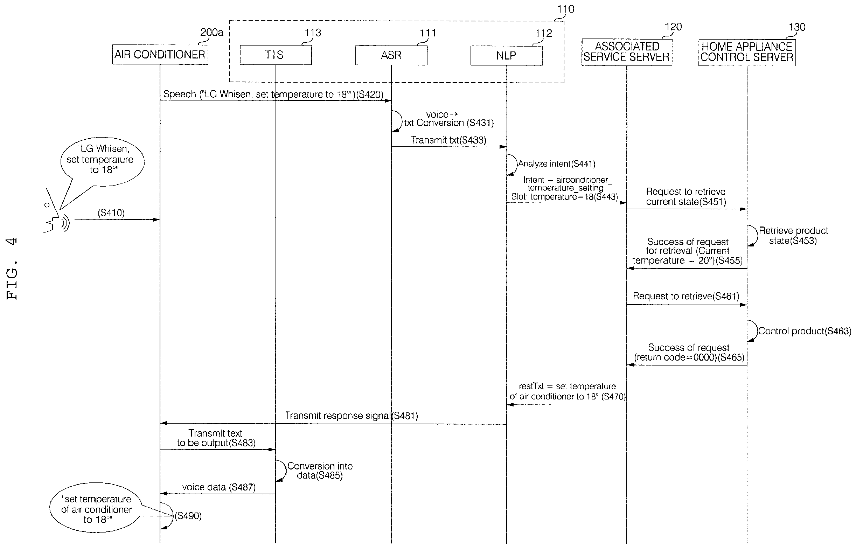

FIGS. 4 to 6 are diagrams illustrating a signal flow in a voice recognition server system according to an example. The diagrams show an example for a signal flow in the voice recognition server system shown in FIG. 3A.

FIG. 4 shows an example of a signal flow in a general situation in which a home appliance 200 operates upon a user's voice command.

The home appliance 200 is exemplified by the air conditioner 200a in the following description, but aspects of the present example are not limited thereto.

Referring to FIG. 4, the home appliance 200 according to an example, for example, the air conditioner 200a, may be configured to receive a user's voice command in S410, and to transmit the received voice command to the voice server 110 in S420.

For example, when a command for changing temperature setting, for example, "LG Whisen, set the temperature to 18 degrees" is received, the air conditioner 200a may be configured to convert the received voice command into digital voice command in a specific format, such as a wave file, and to transmit the digital voice data to the ASR server 111.

Meanwhile, after receiving a wake up signal including a call word, the air conditioner 200a may be configured to wait for a command and transmit an input voice command to the voice server 110.

Alternatively, the air conditioner 200a may be configured to receive successive voice inputs including a call word and a voice command. In this case, the air conditioner 200a recognizes the call word and transmits the voice command to the voice server 110.

Signals transmitted and received via a communication between devices in the system 10 may further comprise identification information of each of the devices and a session value for a task to be performed, as well as main data transmitted and received between the devices.

The ASR server 111 may be configured to recognize the received voice data and convert the voice data into text data in S431, and to transmit the text data to the NLP server in S433.

The NLP server 112 may be configured to analyze and determine the intent of the user's voice command by performing natural language processing on the received text data in S441.

For example, from a voice "LG Whisen, set the temperature to 18 degrees", the NLP server 112 may be configured to determine a voice command intended to change the setting temperature of the air conditioner 200a to 18 degrees.

The NLP server 112 may be configured to transmit a signal corresponding to the determined voice command to the associated service server 120 in S443.

When the associated service server 120 requests the current state information of the air conditioner 200a from the home appliance control server 130 in S451, the home appliance control server 130 may be configured to retrieve the current state information of the air conditioner 200a in S453 and to transmit the current state information of the air conditioner 200a to the associated service server 120 in S455.

If the home appliance control server 130 does not have the current state information of the air conditioner 200a, the home appliance control server 130 may be configured to request and to receive the current state information from the air conditioner 200a.

Meanwhile, according to the determined voice command, the associated service server 120 having received the state information may be configured to transmit, to the home appliance control server 130, a request signal for changing temperature set in the air conditioner 200a to 18 degrees in S461.

The home appliance control server 130 may be configured to control the air conditioner 200a by generating a control signal and transmitting the control signal to the air conditioner 200a based on the request signal in S463.

In addition, after controlling the air conditioner 200a, the home appliance control server 130 may be configured to receive a response signal from the home appliance 200 in response to the control signal, and to transmit processing result information for notifying completion of a requested operation to the associated service server 120 in S465.

The associated service server 120 may be configured to transmit, to the NLP server 112, a signal corresponding to processing result information, for example, "Temperature of the air conditioner is set to 18 degrees" in S470. The NLP server 112 may be configured to transmit, to the home appliance 200, a response signal based on the determined voice command in S481. The response signal based on the determined voice command may comprise the processing result information.

Meanwhile, the home appliance 200 may be configured to transmit a signal including a text (an output text) corresponding to the response signal in S483. When receiving the signal, the TTS server 113 may be configured to convert the text comprised in the received signal into voice data in S485, and to transmit the voice data to the home appliance 200 in S487.

Based on the received voice data, the home appliance 200 may be configured to output an audible guidance message, such as "Temperature of the air conditioner temperature is set to 18 degrees" in S490.

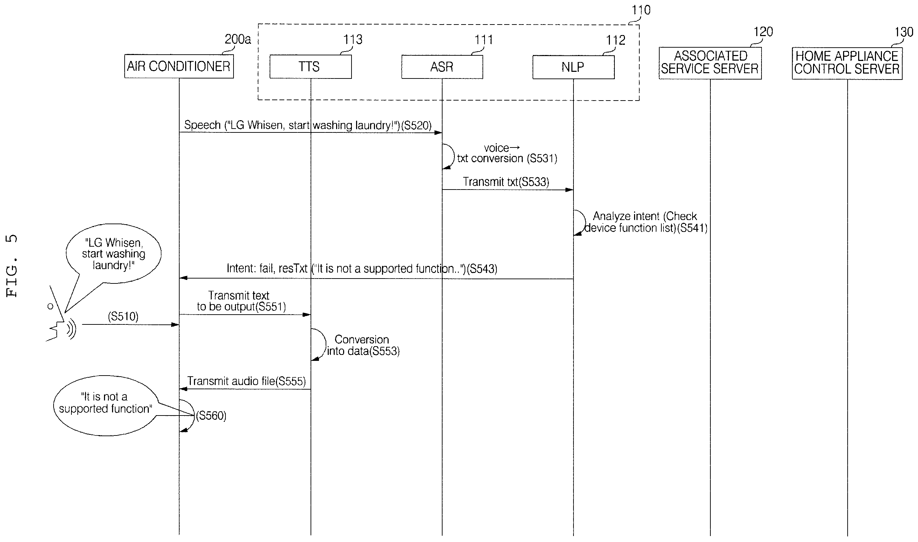

FIG. 5 shows a signal flow in the case where a function not being supported by a corresponding home appliance 200 is requested.

Referring to FIG. 5, the air conditioner 200a according to an example may be configured to receive a user's voice command, for example, "LG Whisen, start washing laundry", about a washing function not supported by the air conditioner 200a in S510.

The air conditioner 200a may be configured to transmit the received voice command to the voice server 110 in S520. The air conditioner 200a may be configured to convert the received voice command into digital voice data in a specific format, such as a wave file, and to transmit the digital voice data to the ASR server 111.

The ASR server 111 may be configured to recognize the received voice data and convert the voice data into text data in S531, and to transmit the text data to the NLP server 112 in S533.

The NLP server 112 may be configured to perform natural language processing on the received text data to analyze and determine the intent of the voice command in S541.

In addition, the NLP server 112 may be configured to determine whether or not the determined voice command is supported. In this example, the NLP server 112 may be configured to determine that the user has requested a washing function that is not supported by the air conditioner 200a.

Next, the NLP server 112 may be configured to transmit, to the air conditioner 200a, a response signal for notifying that the determined voice command is about a function not supported by the home appliance 200 in S543.

Meanwhile, the home appliance 200 may be configured to transmit a signal including a text (an output text) corresponding to the response signal in S551. When receiving the signal, the TTS server 113 may be configured to convert the text comprised in the received signal into voice data in S553 and to transmit the voice data to the home appliance 200 in S555.

Based on the received voice data, the home appliance 200 may be configured to output an audible guidance message, such as "It is not a supported function", in S560.

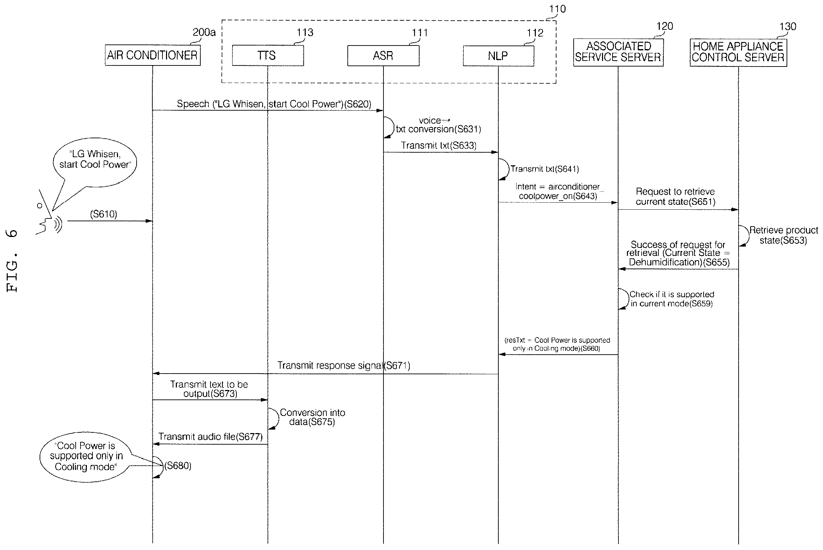

FIG. 6 shows a signal flow in the case where a request for a function not supported in the current operation mode of a corresponding home appliance 200 is received.

Referring to FIG. 6, the air conditioner 200a according to an example may be configured to receive a user's voice command, for example, "LG Whisen, start Cool power", indicating a specific mode operation of the air conditioner 200a in S610.

The air conditioner 200a may be configured to transmit the received voice command to the voice server 110 in S620. The air conditioner 200a may be configured to convert the received voice command into digital voice data in a specific format, such as a wave file, and to transmit the digital voice data to the ASR server 111.

The ASR server 111 may be configured to recognize the received voice data and to convert the voice data into text data in S631, and to transmit the text data to the NLP server 112 in S633.

The NLP server 112 may be configured to analyze and to determine the intent of the voice command by performing natural-language processing on the received text data in S641.

For example, from a voice "LG Whisen, start Cool Power", the NLP server 112 may be configured to determine a voice command intended to operate the air conditioner 200a in the Cool Power mode.

The NLP server 112 may be configured to transmit a signal corresponding to the determined voice command to the associated service server 120 in S643.

When the associated service server 120 requests current state information of the air conditioner 200a from the home appliance control server 130 in S651, the home appliance server 130 may be configured to inquire the current state information of the air conditioner in S653 and to transmit the current state information of the air conditioner 200a to the associated service server 120 in S655.

If the home appliance control server 130 does not have the current state information of the air conditioner 200a, the home appliance control server 130 may be configured to request and receive the current state information from the air conditioner 200a.

Meanwhile, the associated service server 120 having received the current state information may determine, based on the current state information, whether the determined user command is supported in S659. For example, in the case where the air conditioner 200a is operating in a dehumidification mode and the Cool Power mode is supported only in a cooling mode, the NLP server 112 may be configured to determine that the user has requested the Cool Power mode not supported in the current state.

Next, the associated service server 120 may be configured to transmit, to the NLP server 112, a response signal for notifying that the determined voice command is about a function not supported by the home appliance 200 in the current state in S660.

In addition, the associated service server 120 may be configured to transmit, to the NLP server 112, a response signal for notifying that the determined voice command is about a function not supported by the home appliance 200 in the current state in S671.

Meanwhile, the home appliance 200 may be configured to transmit a signal including a text (an output text) corresponding to the response signal in S673. When receiving the signal, the TTS server 113 may be configured to convert the text comprised in the received signal into voice data in S675 and transmit the voice data to the home appliance 200 in S677.

Based on the received voice data, the home appliance 200 may be configured to output an audible guidance message, such as "Cool Power is supported only in a cooling mode", in S680.

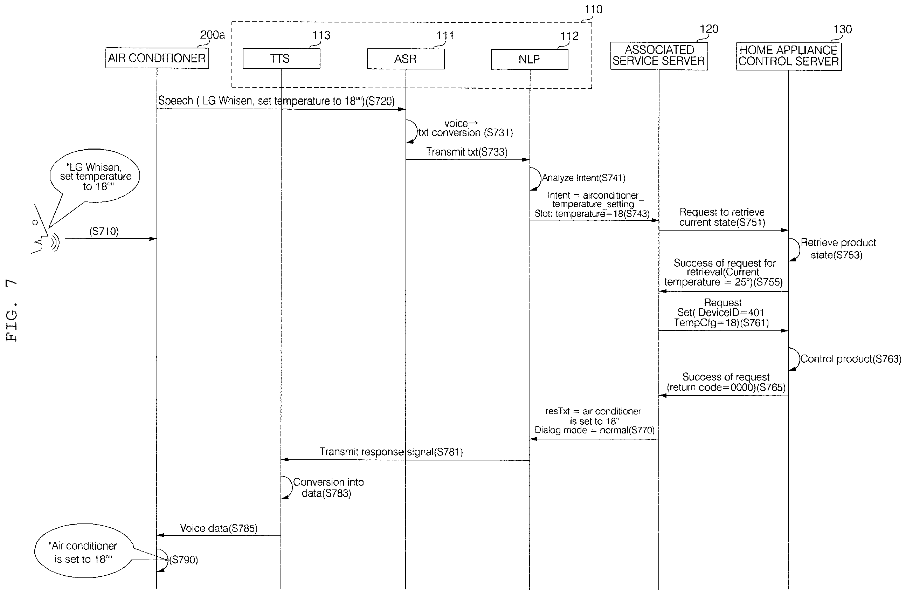

FIGS. 7 to 9 are diagrams illustrating an example of a signal flow in a voice recognition server system according to an embodiment of the present invention. The diagrams show an exemplary signal flow in the voice recognition server system shown in FIG. 3B.

FIG. 7 shows a signal flow in a general situation in which the home appliance 200 operates upon a user's voice command.

Referring to FIG. 7, the home appliance 200 according to an embodiment of the present invention, for example, the air conditioner 200a, may be configured to receive a user's voice command in S710, and to transmit the received voice command to the voice server 110 in S720.

The ASR server 111 may be configured to recognize the received voice data and convert the voice data into text data in S731, and to transmit the text data to the NLP server 112 in S733.

The NLP server 112 may be configured to analyze and determine the intent of the voice command by performing natural language processing on the received text data in S741.

For example, from a voice "LG Whisen, set the temperature to 18 degrees", the NLP server 112 may be configured to determine that by the voice command is intended to change the temperature set in the air conditioner 200a to 18 degrees.

The NLP server 112 may be configured to transmit a signal corresponding to the determined voice command to the associated service server 120 in S743.

When the associated service server 120 requests current state information of the air conditioner 200a from the home appliance control server 130 in S751, the home appliance control server 130 may be configured to inquire the current state information of the air conditioner 200a in S753, and to transmit the current state information of the air conditioner 200a to the associated service server 120 in S755.

If the home appliance control server 130 does not have the current state information of the air conditioner 200a, the home appliance control server 130 may be configured to request and receive the current state information of the air conditioner 200a.

Meanwhile, according to the determined voice command, the associated service server 120 having received the current state information may transmit a request signal for changing the temperature set in the air conditioner 200a to 18 degrees to the home appliance control server 130 in S761.

Based on the request signal, the home appliance control server 130 may be configured to control the air conditioner 200a by generating a control signal and transmitting the control signal to the air conditioner 200a in S763.

In addition, after controlling the air conditioner 200a, the home appliance control server 130 may be configured to receive a response signal from the air conditioner 200a in response to the control signal, and to transmit processing result information for notifying completion of a requested operation to the associated service server 120 in S765.

The associated service server 120 may be configured to transmit a signal corresponding to the processing result information, for example, "Temperature of the air conditioner is set to 18 degrees", to the NLP server 112 in S770.

Meanwhile, the NLP server 112 may be configured to transmit a response signal based on the determined voice command to the TTS server 113 in S781. The response signal based on the determined voice command may comprise the processing result information.

Meanwhile, the TTS server 113 may convert the response signal based on the voice command into voice data in S783, and transmit the voice data to the home appliance 200 in S785.

Based on the received voice data, the home appliance 200 may be configured to output an audible guidance message, such as "Temperature of the air conditioner is set to 18 degrees", in S790.

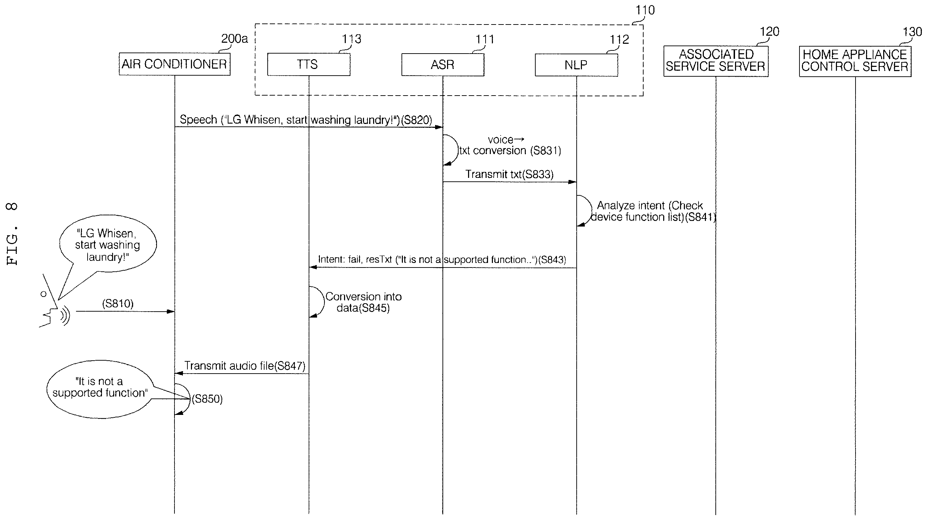

FIG. 8 shows an example of a signal flow in the case where a function not supported by a corresponding home appliance 200 is requested.

Referring to FIG. 8, the air conditioner 200a according to an embodiment of the present invention may be configured to receive a user's voice command, for example, "LG Whisen, start washing laundry", about a washing function that is not supported by the air conditioner 200a in S810.

The air conditioner 200a may be configured to transmit the received voice command to the voice server 110 in S820. The air conditioner 200a may be configured to convert the received voice command into digital voice data in a specific format, such as a wave file, and to transmit the digital voice data to the ASR server 111.

The ASR server 111 may be configured to convert the received voice data into text data in S831, and to transmit the text data to the NLP server 112 in S833.

The NLP server 112 may be configured to analyze and to determine the intent of the voice command by performing natural language processing on the received text data in S841.

In addition, the NLP server 112 may be configured to determine whether or not the determined voice command is supported. In this embodiment, the NLP server 112 may be configured to determine that the user has requested a washing function not being supported by the air conditioner 200a.

Next, the NLP server 112 may be configured to transmit, to the TTS server 113, a response signal for notifying that the determined voice command is about a function not being supported by the air conditioner 200a in S843.

The TTS server 113 may be configured to convert the response signal based on the voice data in S845, and to transmit the voice data to the air conditioner 200a in S847.

Based on the received voice data, the air conditioner 200a may be configured to output an audible guidance message, such as "It is not a supported function", in S850.

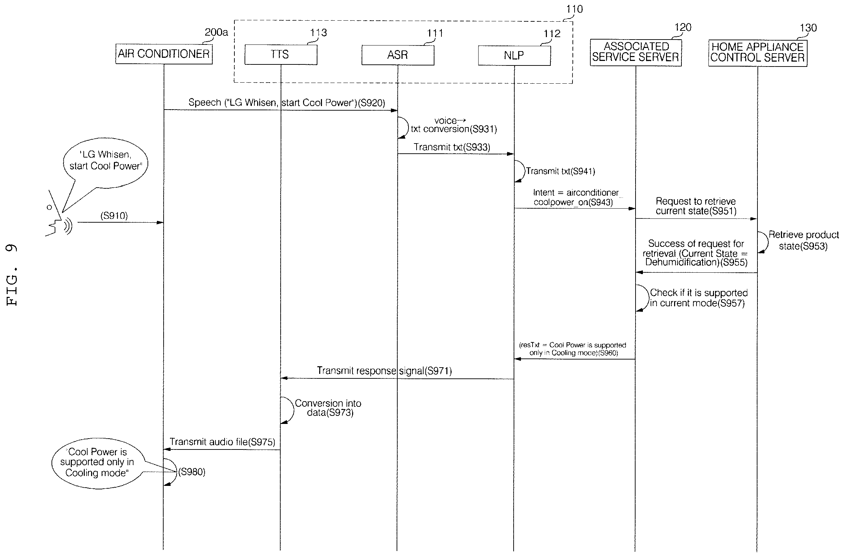

FIG. 9 shows an example of a signal flow in the case where a function not supported in the current operation mode of a corresponding home appliance 200 is requested.

Referring to FIG. 9, the air conditioner 200a according to an embodiment of the present invention may be configured to receive a user's voice command, for example, "LG Whisen, start Cool Power", indicating a specific mode operation of the air conditioner 200a in S910.

The air conditioner 200a may be configured to transmit the received voice command to the voice server 110 in S920. The air conditioner 200a may be configured to convert the received voice command into digital voice data in a specific file, such as a wave file, and to transmit the digital voice data to the ASR server 111.

The ASR server 111 may be configured to recognize the received voice data and convert the voice data into text data in S931, and to transmit the text data to the NLP server 112 in S933.

The NLP server 112 may be configured to analyze and to determine the intent of the voice command by performing natural language processing on the received text data in S941.

For example, from a voice "LG Whisen, start Cool Power", the NLP server 112 may be configured to determine a voice command intended to operate the air conditioner 200a in the Cool Power mode.

The NLP server 112 may be configured to transmit a signal corresponding to the determined voice command to the associated service server 120 in S943.

When the associated service server 120 requests current state information of the air conditioner 200a from the home appliance control server 130 in S951, the home appliance control server 130 may be configured to inquire the current state information of the air conditioner 200a in S953, and to transmit the current state information of the air conditioner 200a to the associated service server 120 in S955.

If the home appliance control server 130 does hot have the current state information of the air conditioner 200a, the home appliance control server 130 may be configured to request and receive the current state information from the air conditioner 200a.

Meanwhile, based on the received current state information of the air conditioner 200a, the associated service server 120 may be configured to determine whether the determined voice command is supported in S957. For example, in the case where the air conditioner 200a is operating in a dehumidification mode and the Cool Power mode is available only in a cooling mode, the NLP server 112 may be configured to determine that the user has requested the Cool Power mode not supported in the current state.

Next, the associated service server 120 may be configured to transmit, to the NLP server 112, a response signal for notifying that the determined voice command is a function not supported by the air conditioner 200a in the current state, in S960.

In addition, the NLP server 112 may be configured to transmit, to the TTS server 113, a response signal indicating that the determined voice command is a function not supported in the current state in S971.

Meanwhile, the TTS server 113 may be configured to convert the response signal based on the voice command into voice data in S973, and to transmit the voice data to the air conditioner 200a in S975.

Based on the received voice data, the air conditioner 200a may be configured to output an audible guidance message, such as "Cool Power is available only in a cooling mode" in S980.

According to the present invention, it is possible to implement user experience where an appropriate audible comment is provided when a user's command is failed to be interpreted or the user's command is about an unavailable function.

By providing audible guidance in an appropriate time and situation during command processing, it is possible to minimize user inconvenience.

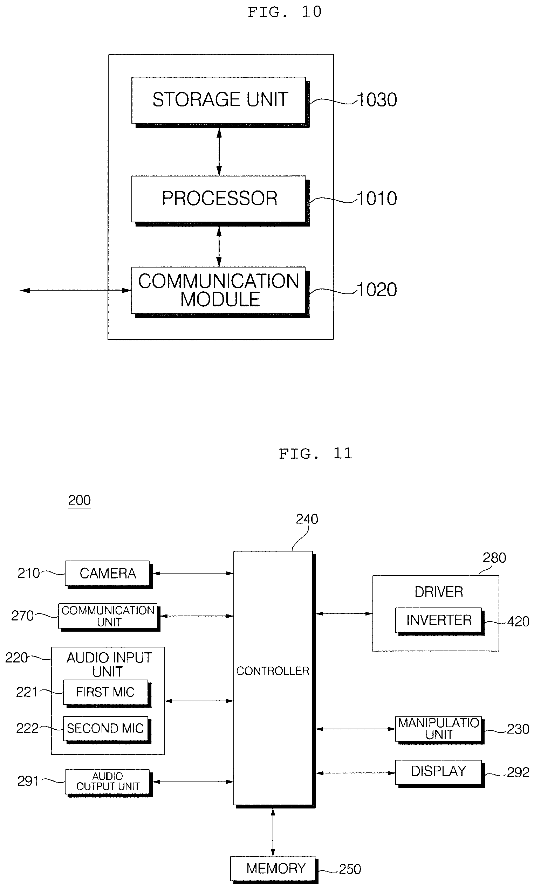

FIG. 10 is an internal block diagram of an example of a server according to an embodiment of the present invention.

The server may be the ASR server 111, the NLP server 112, the TTS server 113, the associated service server 120, or the home appliance control server 130.

Referring to FIG. 10, the server may comprise a communication module 1020, a storage unit 1030, and a processor 1010.

The processor 1010 may be configured to control overall operation of the server.

The communication module 1020 may be configured to diverse data, such as state information, operation information, manipulation information, voice data, and text data, from a home appliance, such as a mobile terminal and an air conditioner, or another server.

In addition, the communication module 1020 may be configured to transmit original or processed data corresponding to the received diverse information corresponding thereto to a home appliance 200, such as a mobile terminal and an air conditioner 200a, or to a different server.

To this end, the communication module 1020 may comprise at least one communication module, such as an Internet module, and a mobile communication module.

The storage unit 1030 may be configured to store received information, and have data required to generate result information corresponding to the received information.

The storage unit 1030 may be configured to store data required for operation of a corresponding server. For example, the storage unit 1030 may store an automatic voice recognition algorithm in the case of the ASR server 111, and may store a home appliance's product information, state information, and information for controlling the home appliance 200 in the case of the home appliance control server 130.

Meanwhile, the server may be a server administered by a manufacturer of a home appliance 200, such as an air conditioner 200a, or by a service provide, and the server may be a kind of Cloud server.

FIG. 11 is an interior block diagram illustrating an example of a home appliance 200 according to an embodiment of the present invention.

Referring to FIG. 11, the home appliance 200 according to an embodiment of the present invention may comprise a camera 210; an audio input unit 220 configured to receive a user's voice command; a manipulation unit 230; a memory 250 configured to store diverse data; a communication unit 270 configured to perform wireless communication with another electronic device; a driving unit 280 configured to perform an operation of each home appliance 200; a display configured to display specific information in the form of an image; an audio output unit 291 configured to output specific information in the form of sound; and a controller 240 configured to control overall operations.

The audio input unit 220 may be configured to receive an external audio signal, such as a user's voice command. To this end, the audio input unit 220 may comprise at least one microphone (MIC). In addition, to more accurately receive a user's voice command, the audio input unit 220 may comprise a plurality of microphones 221 and 222. The plurality of microphones 221 and 222 may be spaced apart from each other and configured to acquire an external audio signal and process the external audio signal into an electric signal.

FIG. 11 shows the case where the audio input unit 220 comprises two microphones, a first microphone 221 and a second microphone 222, but aspects of the present invention are not limited thereto.

The audio input unit 220 may comprise or be connected to a processor, which is configured to convert analog sound into digital data, so as to convert a user's voice command into data so that the controller 240 or a specific server is able to recognize the user's voice command.

Meanwhile, the audio input unit 220 may be configured to utilize various noise removal algorithms for removing noise that occurs in the process of receiving the user's voice command.

In addition, the audio input unit 220 may comprise components for audio signal processing: for example, a filter for removing noise from an audio signal received by each of the microphones 221 and 222, and an amplifier for amplifying a signal output from the filter and output the amplified signal.

The memory 250 may be configured to record diverse information necessary for operation of a home appliance 200, and comprise a volatile or a non-volatile recording medium. A recording medium may be configured to store micro processor-readable data, and may comprise a Hard Disk Drive (HDD), a Solid State Disk (SSD), a Silicon Disk Drive (SDD), a ROM, a RAM, a CD-ROM, a magnetic tape, a floppy disk, an optical data storage device, and the like.

In some implementations, the memory 250 may be configured to store an audio file of a user's voice command, and the stored audio file may be transmitted to the voice recognition server system 100 via the communication unit 270. In addition, the stored audio file may be deleted after a preset period of time passes or after a preset operation is performed.

Meanwhile, the memory 250 may be configured to store data for voice recognition, and the controller 240 may be configured to process a user's voice input signal received via the audio input unit 220, and to perform a voice recognition process.

Alternatively, in some implementations, the home appliance 200 may further comprise a voice recognition module (not shown), and the voice recognition module may be configured to perform simple voice recognition, such as recognizing a call word.

In addition, the memory 250 may be configured to store a call word determination algorithm for determining whether a voice signal comprises a call word.

Based on the call word determination algorithm, the controller 240 and the voice recognition module may be configured to determine whether or not the voice signal comprises the call word.

Meanwhile, the simple voice recognition may be performed by the home appliance 200, and complicated voice recognition, such as processing a natural language, may be performed by the voice recognition server system 100.

For example, when a wake up voice signal including a preset call word is received, the home appliance 200 may be configured to be switched into a state for receiving a voice command. In this case, the home appliance 200 may be configured to perform voice recognition processes up to determination as to whether a call word voice is input, and other subsequent processes regarding the user's voice input may be performed by the voice recognition server system 100.

System resources of the home appliance 200 are limited, and thus, complicated recognition and processing of natural language recognition may be performed by the voice recognition server system 100.

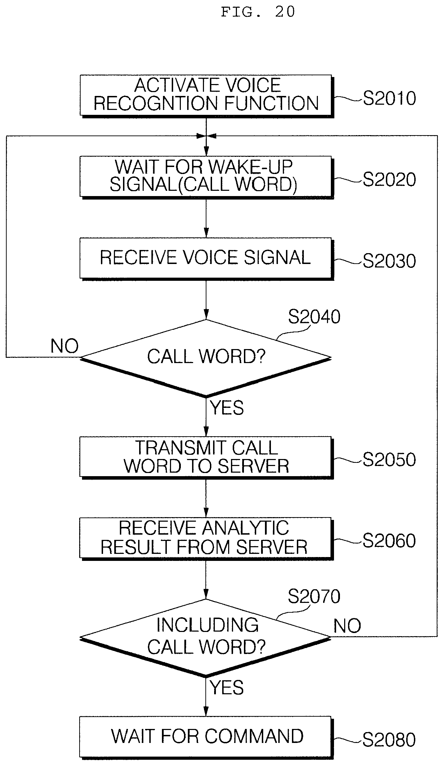

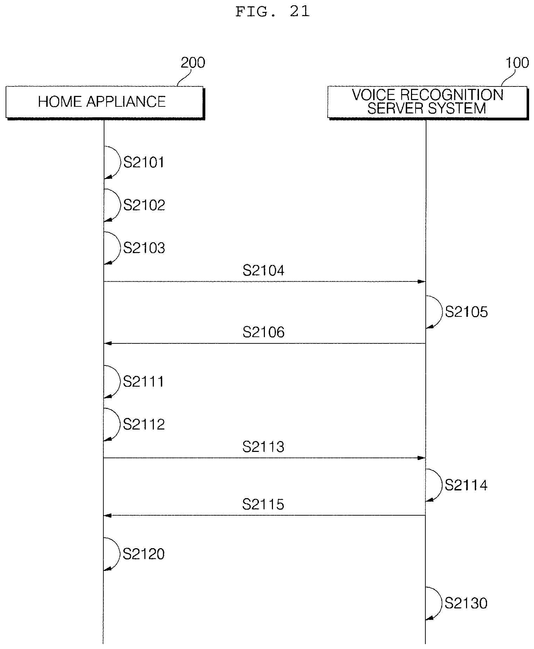

Alternatively, whether a call word voice is input may be determined by both the home appliance 200 and the voice recognition server system 100. Accordingly, it is possible to reduce false recognition of a call word voice input and increase a recognition rate. Regarding this, detailed description thereof will be provided with reference to FIGS. 20 and 21.

The memory 250 may be configured to store limited data. For example, the memory 250 may store data for recognizing a wake up voice signal including a preset call word. In this case, the controller 240 may recognize the wake-up voice signal including the preset call word from a user's voice input signal received via the audio input unit 220.

Meanwhile, a call word may be set by a manufacturer or a different call word may be set for each home appliance 200. For example, call words may be set to be "LG Whisen" for an air conditioner and "LG Dios" for a refrigerator.

In addition, a call word may be changed by a user.

The controller 240 may be configured to perform a control operation so as to transmit a user's voice command, which is input after recognition of a wake up voice signal, to the voice recognition server system 100 via the communication unit 270.

The communication unit 270 may comprise at least one communication module and be configured to transmit and to receive various signals through wireless communication with another electronic device. For example, the communication unit 270 may be configured to communicate with electronic devices inside/outside a smart home system 10.

In addition, the communication unit 270 may be configured to communicate with the AP device 300, and to access a wireless Internet network via the AP device 300 to communicate with other devices.

In addition, the controller 240 may be configured to transmit state information of the home appliance 200 and a user's voice command to the voice recognition server system 100 via the communication unit 270.

Meanwhile, when a control signal is received via the communication unit 270, the controller 240 may be configured to control the home appliance 200 to operate in accordance with the received control signal.

The display 292 may be configured to display information corresponding to a user's command input, a processing result corresponding to the user's command input, an operation mode, an operation state, and an error state in the form of an image.

In some implementations, the display 292 may be configured to form an inter-layered structure with a touch pad to implement a touch screen. In this case, the display 292 may be used as an input device through which information can be input upon a user's touch, as well as an output device.

In addition, under the control of the controller 240, the audio output unit 291 may be configured to output a warning sound, a operation state, a notification message indicative of an error state, information corresponding to a user's command input, and a processing result corresponding to the user's command input, and the like in the form of sound.

Meanwhile, the audio output unit 291 may be configured to convert an electric signal from the controller 240 into an audio signal, and to output the audio signal. To this end, the audio output unit 291 may comprise a speaker.

In addition, the home appliance 200 according to an embodiment of the present invention may provide User Experience (UX) by taking into consideration various situations which could occur during a voice recognition process and a home appliance control process.

The controller 240 may be configured to control the audio output unit 291 and the display 292 to provide specific information to a user using a visual/audible means in response to each step of the voice recognition process and the home appliance control process.

The controller 240 may be configured to control the display 292 to provide visual information in response to each step of the voice recognition process and the home appliance control process.

In addition, the controller 240 may be configured to control the audio output unit 291 to provide audible information in response to each step of the voice recognition process and the home appliance control process.

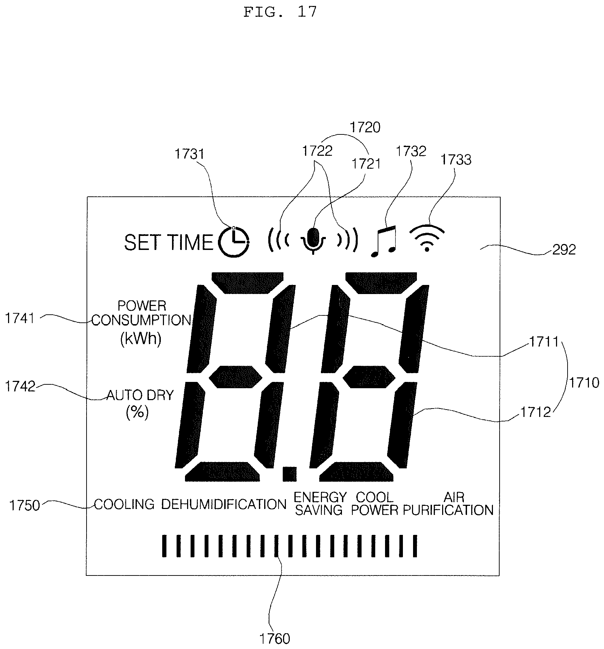

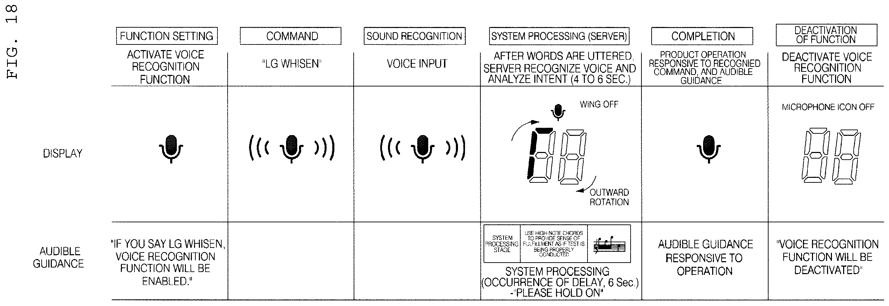

User Experience (UX) provided via the audio output unit 291 and the display 292 during the voice recognition process and the home appliance control process will be described in detail with reference to FIGS. 17 and 18.

The driving unit, also referred to as the driver, 280 performs operations of each home appliance, and thus, the driving unit 280 may have different configuration depending on a home appliance 200.

In one example in which the home appliance 200 is a refrigerator, the driving unit 280 may comprise a refrigerating compartment driving unit configured to operate a refrigerating compartment to supply cold air to a refrigerating compartment; a freezing compartment driving unit configured to operate a freezer fan to supply cold air to a freezing compartment; and a compressor driving unit configured to operate a compressor for compressing refrigerants.

In another example in which a home appliance 200 is a washing machine, the driving unit 280 may comprise a driving unit for driving a drum or a tub.

In yet another example in which the home appliance 200 is an air conditioner 200a, the driving unit 280 may comprise a compressor driving unit to drive a compressor in an exterior unit; an exterior-unit fan driver configured to operate a fan of an exterior unit for heat exchange; and an interior-unit fan driving unit configured to operate an interior unit fan for heat exchange.

In yet another example in which the home appliance 200 is a cooking appliance, the driving unit 280 may comprise a microwave driving unit configured to output a microwave toward the inside of a cavity.

In yet another example in which the home appliance 200 is a cleaner, the driving unit 280 may comprise a fan motor driving unit to suction air.

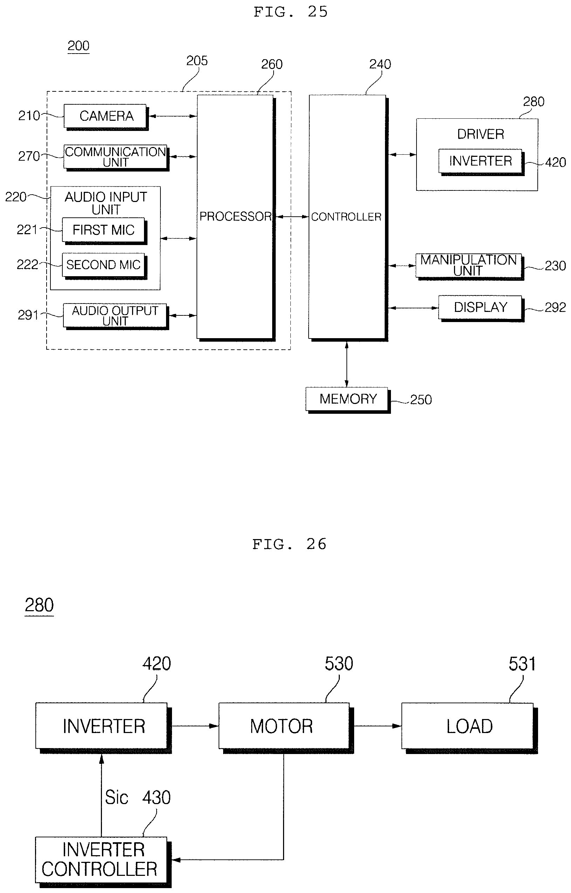

Meanwhile, the driving unit 280 may comprise a motor driving unit, and may comprise an inverter 420 and the like to drive a motor. The motor driving unit will be described in detail with reference to FIGS.26 to 28.

Meanwhile, the home appliance 200 may further comprise a manipulation unit 230 for a user's input, and a camera 210 capable of capturing an image of an area within a specific range of the home appliance 200.

The manipulation unit 230 may comprise a plurality of manipulation buttons, and be configured to transmit a signal corresponding to a pushed button to the controller 240.

The camera 210 may be configured to capture an image of an ambient or surrounding environment of the home appliance 200, and a plurality of such cameras may be installed at each parts for photographing efficiency.

For example, the camera 210 may comprise at least one optical lens, an image sensor (e.g., a CMOS image sensor) configured with a plurality of photodiodes (e.g., pixels) on which an image is formed by lights passing through the optical lens, and a Digital Signal Processor (DSP) configured to form an image based on signals output from the photodiodes. The DSP may be configured to generate not just a still image, but also a video composed of frames which comprises still images.

Meanwhile, an acquired image captured by the camera 210 may be stored in the memory 250.

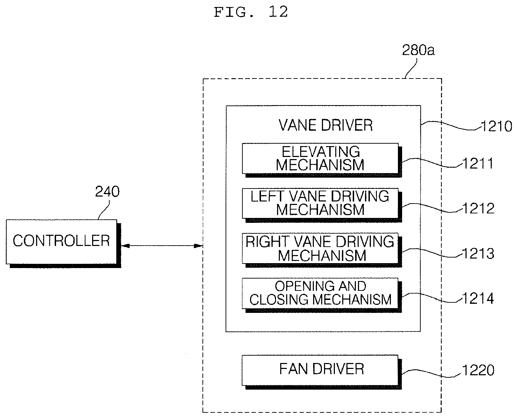

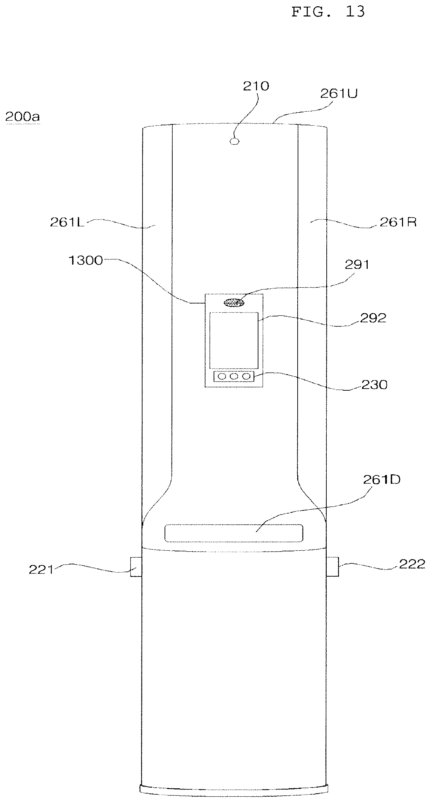

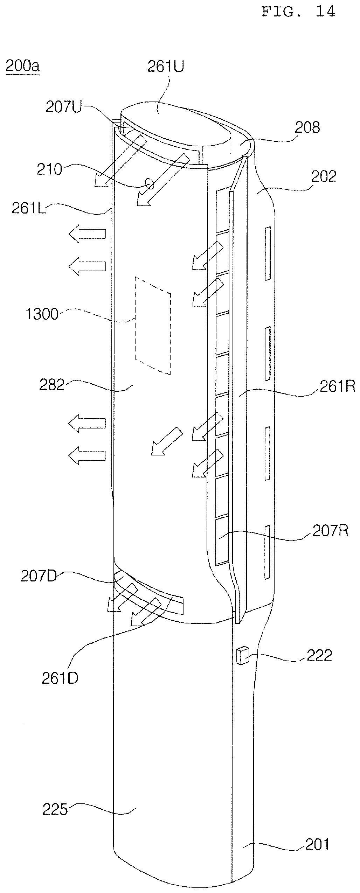

FIG. 12 is a diagram illustrating part of an internal block diagram of an air conditioner according to an embodiment of the present invention, and FIGS. 13 and 14 are diagrams briefly illustrating an exterior of an air conditioner according to an embodiment of the present invention.

More specifically, FIG. 12 shows an example of a vane driving unit 1210 and a fan driving unit 1220 comprised in a driving unit 280a of the air conditioner 200a in the case where the home appliance 200 shown in FIG. 11 is the air conditioner 200a shown in FIGS. 13 and 14.

FIGS. 13 and 14 are sketches briefly illustrating an exterior of an interior unit of an air conditioner 200a according to an embodiment of the present invention.

Referring to FIGS. 11 to 14, the air conditioner 200a according to an embodiment of the present invention may comprise: microphones 221 and 222 for receiving a user's voice command; a communication unit 270 capable of performing wire communication with another electronic device; a controller 240 configured to control overall operations; and a vane driving unit 1210 configured to drive a vane under the control of the controller 240.

In addition, the air conditioner 200a according to an embodiment of the present invention may further comprise a fan driving unit 1220 configured to drive a fan under the control of the controller 240.

The microphones 221 and 222 may be configured to receive an external audio signal, such as a user's voice command. In addition, the micro phones 221 and 222 may be configured to acquire an external audio signal, such as a user's voice command, and to process the external audio signal into an electric signal.

The air conditioner 200a according to this embodiment may comprise: a sucking body 202 in which an air inlet (not shown) is formed; a heat exchanger (not shown) through which air suctioned via the air inlet passes; a fan (not shown) sucking air via the air inlet to allow the air to pass through the exchanger and blowing the heat-exchanged air; and air outlets 207R, 207U, and 207D through which air is discharged to the inside again.

In addition, wind direction adjustment means, such as a louver (not shown) for adjusting a direction of discharged air and/or vanes 261R, 261L, 261U, and 261D, may be disposed in the outlets 207R, 207U, and 207D. In addition, the angle and direction of the wind direction adjustment means may be adjusted by driving a motor under the control of the controller 240. Accordingly, it is possible to adjust the direction of air discharged through the outlets 207R, 207U, and w07D. In addition, by controlling operation of the wind direction adjustment means, it is possible to adjust a blowing direction and a blowing range of air.

For example, the vanes 261R, 261L, 261U, and 261D may be fixed to face one direction to enable air blowing in one direction, or an operation for changing a direction of the vanes 261R, 261L, 261U, and 261D continuously within a set range (the operation which is referred as "swing operation") may be performed so as to make air blow within a set range by changing an air blowing direction in the set range. In addition, by adjusting an angle range for the swing operation of the vanes 261R, 261L, 261U, and 261D, it is possible to narrow or widen a blowing range.

Meanwhile, a fan may be installed in the air conditioner 200a to control an air flow along which air sucked through an air inlet is discharged to an indoor space through the air outlets 207R, 207U*, and 207D. Rotation of the fan is controlled by the fan driving unit 1120, and operation of the fan driving unit 1220 is controlled by the controller 240.

Thus, the controller 240 may be configured to control the vane driving unit 1210 and the fan driving unit 1220 to control a direction of an air flow (air current) discharged from the air conditioner 200a. The controller 240 may be configured to control an amount and a speed of the air current, and may be configured to control a blowing direction adjustment means, such as a louver and a vane, to control the direction of the air current.

Meanwhile, the air conditioner may comprise a plurality of vanes 261R, 261L, 261U, and 261D. In addition, at least some of the plurality of vanes 261R, 261L, 261U, and 261D may be configured to operate in a different manner.

For example, the upper vane 261U may be disposed above the fan to elevate, and may be configured to elevate upon operation and be driven. To this end, the air conditioner 200a may comprise an elevating mechanism 1211 that is configured to elevate the upper vane 261U.

In addition, the upper vane 261U may be configured to function as an upper body that elevates to discharge at least some of airs blown from the fan through the air outlet 207U.

The sucking body 202 may be installed in the upper side of the base 201. Together with the base 201, the sucking body 202 may define a rear upper exterior of the air conditioner 200a. The sucking body 202 may define a rear upper exterior of the air conditioner 202. Together with the base 201, the sucking body 202 may construct a rear case of the air conditioner 200a. The sucking body 202 may be a rear upper case of the air conditioner 200a, and the base 201 may be a rear lower case of the air conditioner 200a.

In the base 201, the controller 240 for controlling various electronic components of the air conditioner 200a may be installed. The various electronic components of the air conditioner 200a may comprise a fan and the like. In the base 201, a base cover 225 may be installed at the front of the base 201.

The air conditioner 200a may further comprise a cleaning unit (not shown) that is configured to purify air. The cleaning unit may be disposed in the sucking body 202. The cleaning unit may be disposed before a heat exchanger in an air flowing direction. The cleaning unit may be provided between the sucking body 202 and the heat exchanger, and may be provided behind the sucking body 202. The cleaning unit may comprise a filter that is configured to filter out foreign substances from the air. The cleaning unit may comprise an ion generator that is configured to generate ions. The cleaning unit may comprise an electrostatic precipitator that is configured to collect foreign substances using the force of electrostatic charge. The cleaning unit may comprise at least one of the filter, the ion generator, or the electrostatic precipitator.

The heat exchanger may be disposed at the front of an air inlet. The heat exchanger may be configured to exchange heat of air sucked through the inlet with a refrigerant. The heat exchanger may be installed to be provided between the air inlet and the fan.

When a compressor installed in an exterior unit is driven, a low-pressured refrigerant may pass through the heat exchanger and the heat exchanger may cool down air having passed through an air inlet. When the compressor is turned on, the heat exchanger may be configured to cool down air by exchanging heat with the refrigerant, and the air conditioner 200a may be configured to function as an air cooler.

The fan may be disposed at the front of the heat exchanger. The fan may be configured as a centrifugal fan that sucks air from the rear and blows the air in at least one direction selected from among the upward, downward, left and right directions. The fan may be configured as a sirocco fan. The fan may be configured as a sirocco fan that flows air in four directions that are the upward, downward, left and right directions.

The fan may comprise a plurality of blower fans. The plurality of blower fans may be sequentially arranged in the upward-downward direction. Each of the plurality of blower fans may be configured as a sirocco fan.

On the front surface of the upper vane 261U, an upper front air outlet 207U may be formed. On the bottom surface of the upper vane 261U, an air inlet (not shown) through which air blown upward inflows may be formed. The upper vane 261U may be configured to guide air, blown by inner fans in the upward direction, in the forward direction.

The upper vane 261U may be disposed above the fan to elevate. When the upper vane 261U elevates, the upper front air outlet 207 may elevate to discharge air. When the upper vane 261U moves downward, the upper front air outlet 207 may be hidden.

The air conditioner may further comprise an elevation guide 208 that guides the upper vane 261U to elevate. The elevation guide 208 may be mounted to be provided above the fan and the heat exchanger. When the upper vane 261U moves upward, the upper front air outlet 207U may be positioned above the lift guide 207 to discharge air. When the upper vane 261 moves downward, the upper front air outlet 207U may be positioned inside the elevation guide 208 to be hidden.

The elevating mechanism 1211 may comprise a driving power source, such as a motor, and a driving power force transferring member, which elevates the upward vane 261U upon driving of the driving power source. The driving force transferring member may comprise a pinion mounted on the driving power source, or a rack engaged with the pinion.

The elevating mechanism 1211 may elevate to a different height according to an operation mode. The controller 240 may be configured to control the elevating mechanism 1211 by a user's selection of an operation mode.

In one example, the controller 240 may be configured to elevate the upper vane 261U to the maximum opening height at which the upper front air outlet 207 is opened to the maximum possible extent according to an operation mode. In another example, the controller 240 may be configured to elevate the upper vane 261U to a height at which the upper front air outlet 207U is partially opened.

On one side surface of the air conditioner 200a, an air outlet 207R through which air blown from a side direction from the fan may be formed.

In addition, on one side surface of the air conditioner, side vanes 261R and 261L may be formed which close and open the left air outlet and the right air outlet 207R. The side vanes 261R and 261L may comprise the left vane 261L and the right vane 261R.

The side vanes 261R and 261L may be rotatably mounted. The air conditioner may comprise side driving mechanism 1212 and 1213 that rotate the side vanes 261R and 261L. The side driving mechanisms 1212 and 1213 may comprise a left vane driving mechanism 1212 and a right vane driving device 1213.

The side driving mechanisms 1212 and 1213 may comprise a driving power source, such as a motor. The side driving mechanisms 1212 and 1213 may comprise at least one driving power transfer member, such as a link and a gear, which is connected to the driving power source to rotate the side vanes 261R and 261L.

The side driving mechanisms 1212 and 1213 may be controlled in a cooling mode by the controller 240. In addition, under the control of the controller 240, the side driving mechanisms 1212 and 1213 may rotate the left vane 261L and the right vane 261R by a specific opening angle.

Accordingly, it is possible to control a blowing direction, and, by performing of a swing operation, air may be blown within a set range while the blowing direction keeps being changed. In addition, by adjusting an angle range of the swing operation, an air blowing range may be narrowed or widen.

The air conditioner may further comprise a lower vane 261D which is located in the lower side of the air conditioner and at which the lower front air outlet 207D is formed.

The lower vane 261D may discharge air, blown downward from the fan, in a forward direction. In the lower vane 261D, a path through which air passes may be formed. On the front surface of the lower vane 261D, the lower front air outlet 207D through which air is discharged to the outside may be formed.

The air conditioner may further comprise an opening and closing mechanism 1214 for opening and closing the lower front air outlet 207D. To opening and close the lower front air outlet 207D, the opening and closing mechanism 1214 may comprise a moving kit (not shown) that moves the lower vane 261D. The moving kit may comprise: a driving power source such as a motor; a moving kit carrier in which the moving kit is seated; and at least one driving power transfer member that moves the moving kit carrier forward and backward when the driving power source operates.

The lower vane 261D may move forward to close the lower front air outlet 207D, and move backward to open the lower front air outlet 207D.

When operating in a specific mode, the opening and closing mechanism 1214 may be controlled to open the lower front air outlet 207D.

The air conditioner 200a may further comprise a blower cover 282 disposed in front of the fan, and the blower cover 282 may define a front upper exterior of the air conditioner 200a. The blower cover 282 may be provided in the upper side of a base cover 225. Together with the base cover 225, the blower cover 282 may define a front side exterior of the air conditioner 200a. The blower cover 282 may be a front upper cover of the air conditioner 200a, and the base cover 225 may be a front lower cover of the air conditioner 200a.

The air conditioner 200a may comprise a display 292 that displays diverse information. In addition, the air conditioner 200a may further comprise an audio output unit 292 that outputs an audio signal, and a speaker of the audio output unit 292 may be provided on the front surface of the air conditioner 200a or at an appropriate position.

In addition, the air conditioner 200a may comprise a manipulation unit 230 having a plurality of buttons through which various commands can be input, and a camera capable of capturing an image of an ambient area in a specific range.

Meanwhile, according to one aspect of the present invention, a front panel may be provided on the front surface of the blower cover 282 or the base cover 225. The display 292, the speaker of the audio output unit 292, and manipulation buttons of the manipulation unit 230 may be provided on the front panel 1300.

The air conditioner 200a may operate according to a plurality of operation modes. The controller 240 may be configured to control the driving unit 1210 and the fan driving unit 1220 according to a selected operation mode.

For example, in a specific operation mode, the controller 240 may be configured to perform control to open all outsets of the plurality of vanes 261R, 261L, 261U, and 261D.

Alternatively, in a specific operation mode, the controller 240 may be configured to control a specific vane so that an air outlet of the specific vane remains closed. For example, in a specific operation mode, the controller 240 may be configured to control the lower vane 261D to remain closed.

In addition, according to an operation mode, the controller 240 may be configured to adjust a lifting height of the upper vane 261U and an opening angle of the left/right vanes 261R or 261L.

In addition the controller 240 may be configured to control a rotation speed of the fan according to an operation mode in order to adjust an amount of wind.

Meanwhile, the exterior and structure of the air conditioner 200a shown in FIGS. 13 and 14 are exemplary, and thus, the present invention is not limited thereto. For example, the position, number, and structure of each of the microphones 221 and 222, the camera 210, the audio output unit 291, and vanes 261R, 261L, 261U, and 261D may vary depending on design specification.

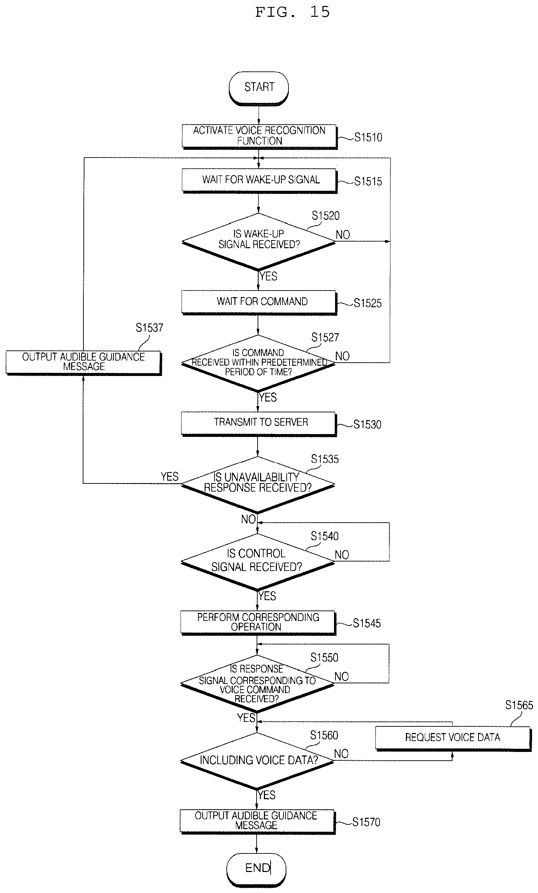

FIG. 15 is a flowchart illustrating a method for operating the home appliance 200 according to an embodiment of the present invention.

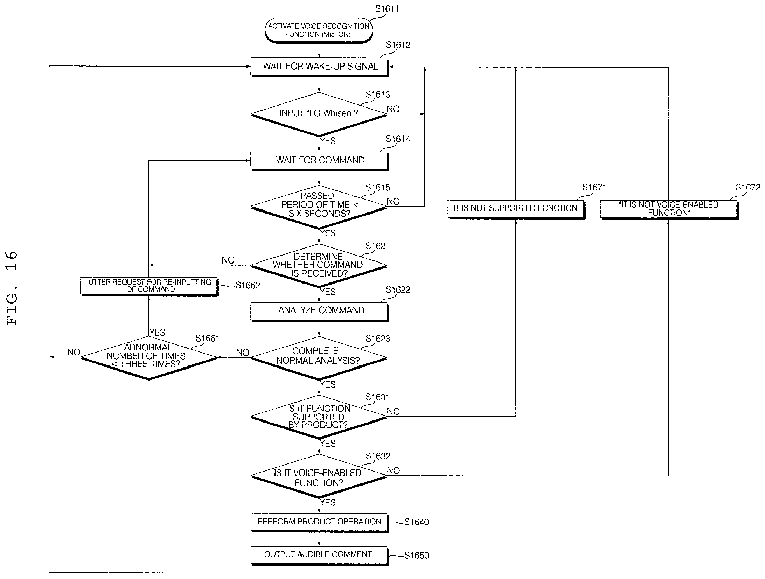

FIG. 16 is a flowchart illustrating a method for operating a smart home system including a voice recognition server system and the home appliance 200 according to an embodiment of the present invention.

FIGS. 17 and 18 are views for illustrating information that is provided by the home appliance 200 during a voice recognition and control process according to an embodiment of the present invention.

Referring to FIG. 15, the home appliance 200 may be configured to activate a voice recognition function upon a user input in S1510. Upon the user input, the home appliance 200 may be configured to activate the microphones 221 and 222.

Alternatively, the home appliance 200 may be configured to automatically activate a voice recognition function according to setting regarding activation of the voice recognition function.

For example, when power is on, the home appliance 200 may be configured to automatically activate the microphones 221 and 222 and activate the voice recognition function.

The home appliance 200 according to an embodiment of the present invention may provide User Experience (UX) which takes into consideration various situations that could occur during the voice recognition process and the home appliance control process.

The controller 240 may be configured to control the display 292 to provide visual information in response to each step of the voice recognition process and the home appliance control process.

In addition, the controller 240 may be configured to control the audio output unit 291 to provide audible information in response to each step of the voice recognition process and the home appliance control process.

FIG. 17 shows an example of the display 292 provided in the air conditioner 200a in the case in that the home appliance 200 is the air conditioner 200a.

The controller 240 may be configured to perform a control operation so that an operation mode and the current state of the air conditioner 200a are displayed on the display 292.

The display 292 may be configured to display an operation mode, the current state, and setting items of the air conditioner 200a in the form of any of various visual images. The display 292 may be configured to display the operation mode, the current state, and the setting items of the air conditioner 200a in the form of a text, number, or symbol or in the form of a graphic image, such as an icon.

In addition, the display 292 may be configured to display information corresponding to each stage of processing a voice input.

Referring to FIG. 17, the display 292 may comprise a voice recognition icon 1720 that is turned on or off during a voice recognition process. For example, the display 292 may comprise a microphone icon 1721 indicating activation of a microphone, and a sound (or wing) icon 1722 disposed on the left/right side of the microphone icon 1721.

In addition, the display 292 may comprise at least one seven-segment displays 1711 and 1712 that comprise a plurality of segments to display numbers.

For example, the display 292 may comprise two seven-segment displays 1711 and 1712.

The seven segment displays 1711 and 1712 may be a display for displaying numbers or a text, and each segment of the seven-segment displays 1711 and 1712 may comprise at least one light emitting device and display number or a text using a combination of independently driving segments.

The seven-segment displays 1711 and 1712 defined in the present invention may have a general seven-segment structure in which a plurality of light emitting devices is selectively turned on to light up a number form, and may comprise a structure in which a number-shaped graphic, such as 7 segments, is output on a liquid display device. That is, as for the seven-segment displays 1711 and 1712, an output device having any form to be output in the shape of 7 segments may be applied.

Meanwhile, a pair of seven-segment displays 1711 and 1712 may be referred to as 88 segment display 1710.

The display 292 of the air conditioner 200a may be configured to use the 88 segment display 1710 particularly to display temperature.

In addition, the display 292 may comprise a reservation setting indicator 1731, an operation sound indicator 132, a Wi-Fi indicator 1733, a power amount indicator 1741, an auto dry indicator 1742, an operation type indicator 1750, a wind speed indicator 1760, etc.

Each of the indicators 1731, 1732, 1733, 1741, 1742, 1750, and 1760 may be displayed in the form of a specific text and/or icon.

FIG. 18 is a table showing visual information displayed on the display 292 and audible guidance messages output by the audio output unit 291 at each stage of a voice recognition process.

Referring to FIGS. 15 to 18, when a voice recognition function is activated, the display 292 may be configured to light up the microphone icon 1721, and the controller 240 may be configured to perform a control operation to set a wake-up signal standby mode for receiving a wake-up voice signal including a preset call word in S1515.

Meanwhile, when the voice recognition function is deactivated, the microphone icon 1721 may stop being displayed.

In addition, the audio output unit 291 may output an audible guidance message for notifying a user's utterance including a call word. For example, when the call word comprises "LG Whisen", the audio output unit 291 may be configured to output an audible guidance message in a voice form, such as "If you say LG Whisen, voice recognition function will be activated".

Meanwhile, in the case where the microphones 221 and 222 of the home appliance 200 are activated, the microphones 221 and 222 may receive an input voice and transmit the received voice to the controller 240.

Meanwhile, when a wake-up voice signal including a preset call word is received via the microphone 221 or 222 in s1520, the home appliance 200 may switch to a command standby mode for receiving a voice command in S1525. When the wake-up voice signal is received via the microphone 221 or 222 in S1520, the controller 240 may be configured to perform a control operation to set the command standby mode in S1525.

In addition, under the control of the controller 240, the display 292 may be configured to display the sound icons 1722, which is located on the left and right sides of the microphone icon 1721, in a blinking manner.

Accordingly, a user may intuitively notice that the home appliance 200 is waiting for the user's command input.

In addition, displaying the sound icons 1722 to blink may be carried out constantly during the command standby mode.

Alternatively, after a preset period of time has passed after the entrance to the command standby mode, the sound icon 1722 may be kept turned on. In some implementations, when a user's voice command is received, the sound icon 1722 may blink again for the preset period of time.

Preferably, the home appliance 200 is be configured to transmit, to the home appliance 200, only a voice signal received in the command standby mode. This has the advantage that the home appliance 200 does not always have to wait for a natural language command, so that an increased burden on power consumption for the voice recognition function can be avoided, as well as a CPU occupation rate, and loads on servers of the voice recognition server system.

In addition, the home appliance 200 may be configured to set a condition for a command waiting time. When a command is received within the set time, the home appliance 200 may be configured to receive sound until the completion of the command, and transmit the sound to a server.

According to one aspect of the present invention, the home appliance 200 may be configured to perform a voice recognition process of up to the step of determining whether a call word voice is received, and other subsequent steps for voice recognition of a user's voice input may be performed by voice recognition server system 100.

Alternatively, whether a call word voice is received may be performed by both the home appliance 200 and the voice recognition server system 100.

Meanwhile, the call word may be set by a manufacturer, or a different call word may be set for each home appliance 200. For example, call words may be set to be "LG Whisen" for an air conditioner and "LG Dios" for a refrigerator. In addition, the call word may be changed by a user.

Meanwhile, the controller 240 may perform control to transmit a user's voice command, received after recognition of a wake-up voice signal, to the voice recognition server system 100 via the communication unit 270 in S1530.

Meanwhile, waiting for a user's voice command for an unlimited period of time does not fit the intent of the user who does not input any command. Thus, the command standby mode may be set to process only a voice command received within a specific period of time in S1527.

In this case, the controller 240 may perform control so that voice data including the voice command received within the preset period of time is transmitted to the voice server 110 in S1530.

Meanwhile, if the voice command is not received within the preset period of time in S1527, the controller 240 may be configured to switch to the wake-up signal standby mode again.

In addition, if a voice command is received via the microphone 221 or 222 within the preset period of time and the communication unit 270 receives voice data in S1530, the display 292 may sequentially turn on segments provided in the outer area among a plurality of segments of the segment display 1710.

Meanwhile, while the 88 segment display 1710 rotates in the clockwise direction or the counter-clockwise direction in response to the transmission of the voice data in S1530, the audio output unit 291 may be configured to output an effect sound, music, or an audible guidance message.

The audio output unit 291 may be configured to output an effect sound, such as system processing sound, which is an audible guidance message for notifying that processing a command is ongoing.

The audio output unit 291 needs to output an audible guidance message in response to occurrence of a specific event. If the specific event, for example, receipt of a signal from a server, occurs when the audio output unit 291 is outputting a specific audible guidance message, the current audible guidance message may stop and this may make a user to feel uncomfortable.

Thus, while a voice command is processed in the voice server 110, it is desirable that the audio output unit 291 plays back specific music to make the user feel comfortable.

In addition, if processing a command is delayed, the audio output unit 291 may output an audible guidance message, such as "Please hold on."

In some implementations, if the communication unit 270 fails to receive a response signal based on the voice command from the voice server 110 within a first time, the audio output unit 291 may be configured to output an audible guidance message for requesting a user to wait. In this case, if the communication unit 270 fails to receive any response signal based on the voice command within a second period of time subsequent to the first period of time, the audio output unit 291 may be configured to output an audible guidance message for requesting re-inputting of a voice command.

If the communication unit 270 fails to receive any response signal based on the voice command even after the second period of time, the control unit 240 may be configured to switch the operation mode to the command standby mode.

The home appliance 200 according to an embodiment of the present invention may provide specific information to a user in a different way.

For example, when a voice command is received within a preset period of time, the home appliance 200 according to an embodiment of the present invention may be configured to operate such that the driving unit 280 performs a feedback operation in response to a receipt of the command so as to notify a user of the receipt of the command.

In some implementations, when the voice command is received within the preset period of time in S1527, the controller 240 may be configured to perform control so that a feedback operation corresponding to receipt of the voice command is performed to notify that the home appliance 200 has received the command.

In this case, the driving unit 280 may be configured to perform a preset operation under the control of the controller 240.

For example, when the home appliance 200 is the air conditioner 200a, the driving unit 280 may include a vane driving unit 1210, a fan driving unit 1220, etc.

As the voice command is received within the preset period of time, the vane driving unit 1210 may be configured to drive at least one vane 261R, 261L, 261U, and 261D to perform at least one of an elevating operation, a moving operation, a rotating operation, or a swing operation.

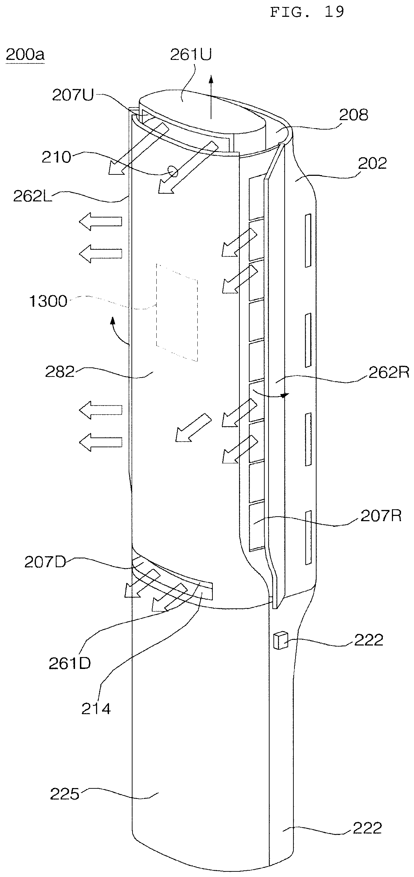

Referring to FIG. 19, when a voice command is received via the microphone 221 or 222 of the air conditioner 200a within a preset period of time, the vane driving unit 1210 may be configured to move an upper vane 261U up to a specific height.

In addition, the vane driving unit 1210 may be configured to rotate the left vane 261L and the right vane 261R by a specific angle.

In addition, the vane driving unit 1210 may be configured to move the lower vane 261D inwardly to thereby open a lower front air outlet 207D.

In the case where the air outlets are closed since the air conditioner 200a is not operating in a specific mode, if a voice command is received, the vane driving unit 1210 may be configured to drive the plurality of vanes 261R, 261L, 261U, and 261U under the control of the controller 240.

In another example, the vane driving unit 1210 may be configured to drive some of the plurality of vanes 261R, 261L, 261U, and 261D.

In another example, if a voice command is received via the microphone 221 or 222 within a preset period of time, the vane driving unit 1210 may be configured to rotate the left vane 261L and the right vane 261R by a specific angle under the control of the controller 240.

In addition, the vane driving unit 1210 may be configured to control the left vane 261L and the right vane 26R to perform a swing operation which indicates rotating repeatedly within a specific range.

According to an embodiment of the present invention, when a voice command is received within a preset period of time, the vanes 261R, 261R, 261U and 261D may be moved to allow a user to be intuitively aware of the receipt of the command, thereby increasing user reliability.

In addition, when a user inputs a voice command to the air conditioner 200a, the user usually intends to operate the air conditioner 200a. Thus, in this case, the vanes 261R, 261L, 261U, and 261D are moved preemptively and then an operation corresponding to the voice command determined later on is performed, thereby enabled to more quickly respond to the user's voice command.

Meanwhile, the voice server 110 and the voice recognition server system 100 may be configured to recognize and process voice data including a voice command received from the home alliance 200, as described above with reference to FIGS. 1 to 9.

Accordingly, when the communication unit 270 receives a control signal based on the voice command from the home appliance control server 130 in S1540, the controller 240 may be configured to control the home appliance 200 to operate in response to the received control signal in S1545 of Figure 15.

In addition, when the communication unit 270 receives a response signal based on the voice command from the voice server 110 in S1550 in Figure 15, the controller 240 may be configured to control the audio output unit 291 to output an audible guidance message corresponding to the response signal in S1570 in Figure 15.

In some implementations, when the response signal does not comprise voice data in S1560 in Figure 15, the controller 240 may be configured to perform control to request voice data from the voice server 110 in S1565 in Figure 15 and receive the requested voice data from the voice server 110.

Meanwhile, according to a voice recognition result, a signal corresponding to voice recognition failure may be received from the voice server 110 via the communication unit 270. In this case, the controller 240 may be configured to control the audio output unit 291 to output an audible guidance message for requesting re-inputting of a voice command and to switch the operation mode to the command standby mode.

In addition, depending on a determination as to whether a determined voice command is supported, a signal for notifying that the voice command is about an unsupported function may be received from the voice server 110 via the communication unit 270 in S1535 in Figure 15. In this case, the controller 240 may be configured to control the audio output unit 291 to output an audible guidance message for notifying that the voice command is about an unsupported function in S1537 in Figure 15.

In this case, the controller 240 may be configured to perform control to switch to the wake-up signal standby mode.

Alternatively, the controller 240 may be configured to perform control to switch to the command standby mode again.

According to the present invention, as visual information and/or an audible guidance message suitable for each situation are provided, it is possible to accurately find out which problem disrupts the normal operation at which step of a voice control command process. In addition, it increases freedom of a command for controlling a product, thereby improving usability of the product.

Referring to FIGS. 16 and 18, the home appliance 200 may be configured to activate a voice recognition function in S1611 to set the wake-up signal standby mode for receiving a wake-up voice signal including a preset call word in S1612.

In response to the activation of the voice recognition function in S1611, the microphone icon 1721 on the display 292 may be turned on and the audio output unit 291 may output an audible guidance message for guiding a user's uttering of a call word.

When a preset call word, such as "LG Whisen" and "LG Dios", is received via the microphone 221 or 222 in S1613, the home appliance 200 may be configured to switch to the command standby mode for receiving a voice command in S1614.

In response to the entrance to the command standby mode in S1614, the display 291 may be configured to blink the wing-shaped sound icons 1722 located on the left and right sides of the microphone icon 1721.

The command standby mode may be set to process only a voice command received within a specific period of time in S1615. For example, the specific period of time may be set to, e.g. six seconds, and, in this case, the controller 240 may be configured to perform control to transmit voice data, including a voice command received within the six seconds, to the voice server 110 in S1621.

In addition, if a voice command is received via the microphone 221 or 222 within the preset period of time and the communication unit 270 transmits voice data in S1621, the display 292 may be configured to sequentially turn on and off segments that are provided in the outer area among the plurality of segments of the display 1710.

In addition, while the 88 segment display 1710 rotates in the clockwise direction or the counter-clockwise direction in response to the transmission of the voice data in S1621, the audio output unit 291 may be configured to output an effect sound, music, or an audible guidance message.

Meanwhile, if the voice command is not received within the preset period of time in S1621, the controller 240 may be configured to perform control to switch to the wake-up signal standby mode again.

According to one aspect of the present invention, the home appliance 200 may be configured to perform a voice recognition process up to the stage of receiving a call word, and other following stages of the voice recognition process with respect to a user's voice input may be performed by the voice recognition server system 100.

When voice data including the voice command is received from the home appliance 200 in S1621, the voice server 110 may be configured to perform natural-language processing to analyze the user's intent and determine the voice command in S1622.

When the voice command is not properly analyzed in S1623, the voice server 110 may be configured to inform the home appliance 200 of failure of the voice command analysis, and the home appliance 200 may be configured to output an audible guidance message including a request for re-inputting of a command in S1662.

In this case, the procedure of, in response to failure of voice command analysis, requesting re-inputting of a command and analyzing a re-input command may be set to be performed by a preset number of times in S1661.

For example, if the analysis fails three times or more, the controller 240 does not request re-inputting of a command and instead may be configured to perform control to switch to the wake-up signal standby mode again.

Meanwhile, if the voice command is properly analyzed in S1623, the voice server 110 may be configured to transmit a signal corresponding to the determined voice command to the associated service server 120.

Meanwhile, the associated service server 120 may be configured to determine whether the determined voice command is supported.

For example, the associated service server 120 may be configured to determine whether the determined voice command is about a function supported by the home appliance 200 in S1631.

In addition, the associated service server 120 may be configured to determine whether the determined voice command is a function supported by the corresponding home appliance 200 in the current state, that is, whether the determined voice command is a function that is enabled responsive to a voice command in S1632.

If the determined voice command is not a supported function, the associated service server 120 may be configured to transmit, via the voice server 110 to the home appliance 200, a response signal indicating that the determined voice command is not a supported function.

Accordingly, the home appliance 200 may be configured to output an audible guidance message, such as "It is not a supported function" and "This is not a voice-enabled function", in S1671 and 1672.

In addition, the controller 240 may be configured to perform control to switch to the wake-up signal standby mode.

If the determined voice command is about the home appliance 200, the associated service server 120 may be configured to perform a corresponding operation by communicating with the home appliance control server 130.

Alternatively, if the determined voice command is not about the home appliance 200, the associated service server 120 may be configured to perform a corresponding operation by communicating with an external service.

If the determined voice command is to control the home appliance 200, the associated service server 120 may be configured to generate a request signal corresponding to the determined voice command and transmit the request signal to the home appliance control server 130.

The home appliance control server 130 may be configured to receive the request signal from the associated service server 120 and to transmit a control signal based on the request signal to the home appliance 200.

For example, when a request for changing temperature set in the air conditioner 200a is received, the home appliance control server 130 may be configured to transmit a control signal for changing the set temperature to the air conditioner 200a.

Meanwhile, the home appliance 200 may be configured to perform a corresponding operation in accordance with the control signal received from the home appliance control server 130 in S1640.

In addition, after performed a requested operation, the home appliance 200 may be configured to transmit, to the home appliance control server 130, a signal for notifying that the requested operation has been performed.

In addition, the home appliance control server 130 may be configured to receive a response signal responsive to the control signal from the home appliance 200, and to transmit processing result information for notifying successful completion of the requested operation to the associated service server 120.

The associated service server 120 may be configured to transmit a signal corresponding to processing result information, for example, "Temperature of the air conditioner is set to 18 degrees", to the NLP server 112. The NLP server 112 may be configured to transmit a response signal based on the determined user command to the home appliance 200.

Meanwhile, based on voice data received from the voice server, the home appliance 200 may be configured to output an audible guidance message including audible guidance, such as "Temperature of the air conditioner is set to 18 degrees", in S1650.

As described above, a call word for voice recognition may be processed in the home appliance 200 through keyword recognition. In this case, it is difficult to reflect recognition performance improved later, and a problem may occur due to false recognition.

That is, in order to input a command for the voice recognition function, it is required to set a command standby mode using a keyword call word. However, it is not possible to upgrade call word recognition performance after the home appliance 200 is sold to a user.

In addition, false recognition may occur depending on call word recognition performance of the home appliance 200. In this case, the home appliance 200 may output an answering message even though a user does not call the home appliance 200. To solve this problem, a method for improving recognition performance to minimize false recognition is provided.

As described above with reference to FIGS. 17 to 19, if a wake-up voice signal including a preset call word is received, the controller 240 may be configured to perform control to set the command standby mode.

In this case, the display 292, the audio output unit 291, and the driver 280 may be configured to provide a variety of feedback in response to a user's uttering a voice. Such feedback, if provided after precise recognition, may be providing, to the user, information indicating that the user's voice is received and being processed by the home appliance 200. In this manner, user convenience may improve.

However, if such feedback is provided based on false recognition, it may cause false operation and unnecessary power consumption and even degrade product reliability and voice recognition reliability.

Thus, false recognition may occur depending on call word recognition performance of the home appliance 200. In this case, the home appliance 200 may be configured to output an answering message even though a user does not call the home appliance 200. To solve this problem, a method for improving recognition performance to minimize false recognition is provided.

To this end, according to one aspect of the present invention, determining whether a wake-up signal (call word) is received may be performed by both the home appliance 200 and the voice recognition server system 100. Accordingly, false recognition of a call word may be reduced and recognition rate may be increased.

That is, in this embodiment, the home appliance 200 is not alone to recognize a call word. If the home appliance 200 recognizes a user's uttering a voice and confirms that the user's voice is a call word, the home appliance 200 transmits the voice to the voice recognition server system 100 to check once again if the voice is a call word, and, if so, set the command standby mode.

Due to such double recognition, it is possible to minimize user inconvenience caused by false recognition and keep improving call word recognition performance by use of the voice recognition server system 100.

FIG. 20 is a flowchart illustrating a method for operating the home appliance 200 according to an embodiment. More specifically, FIG. 20 is a flowchart showing a procedure in which both the home appliance 200 and the voice recognition server system 100 are configured to make a determination from a receipt of a wake-up signal (call word) up to a stage of setting a command standby mode.

Thus, the embodiment in FIG. 20 is different from a procedure from the voice recognition activation stage S1510 and S1611 to the command waiting stage S1525 and S1614 described with reference to FIGS. 15 and 16.

In addition, although operation after entrance to the command standby mode setting is not illustrated in FIG. 20, the same operations after entrance to the command standby mode in S1525 and S1614 described with reference to FIGS. 15 and 16 may be performed.

Hereinafter, difference between the example shown in FIG. 20 and the example shown in FIGS. 15 and 16 will be primarily described.

Referring to FIG. 20, the home appliance 200 may be configured to activate the voice recognition function upon a user input in S2010. In response to the user input, the controller 240 of the home appliance 200 may be configured to activate the microphones 221 and 222.

Alternatively, the home appliance 200 may be configured to automatically activate settings regarding activation of the voice recognition function. For example, when power is on, the home appliance 200 may be configured to automatically activate the microphones 221 and 222 to activate the voice recognition function.

In response to the activation of the voice recognition function in S2010, the home appliance 200 may be configured to set the wake-up signal standby mode for receiving a wake-up voice signal including a preset call word in S2020.

In the wake-up signal standby mode S2020, the home appliance 200 may be configured to receive a voice signal via the audio input unit 220 including at least one microphone 221 and 222 in S2030.

The controller 240 and/or a voice recognition module 205 (see FIG. 25) of the home appliance 200 may be configured to determine whether the voice signal received via the audio input unit 220 comprises the call word in S2040.

If sound lauder than a specific level is input when the voice recognition function is activated, the controller 240 and/or the voice recognition module 205 may be configured to determine whether the sound is a call word.

If an analytic result shows that the voice signal is not a call word, the controller 240 may be configured to perform control to set the call word standby mode in S2020 or to transmit an audio file of the sound to the voice recognition server system 100.

If the voice signal comprises the call word, the controller 240 may be configured to control the communication unit 270 to transmit the received voice signal to the voice recognition server system 100 in S2050. In this case, data transmitted by the communication unit 270 to the voice recognition server system 100 may comprise the audio file of the received voice signal.

If the voice signal does not comprise the call word, the controller 240 may be configured to perform control to return to the wake-up signal standby mode in S2020.

Meanwhile, upon the voice recognition server system 100 having received the voice signal from the communication unit 270 may be configured to determine whether the voice signal comprises the call word.

The voice recognition server system 100 may be configured to analyze the received call word audio file once again to determine whether the voice signal is the call word.

Then, the home appliance 200 may be configured to receive information on a result of voice recognition analysis of the voice signal from the voice recognition server system 100 via the communication unit 270 in S2060.

The information on a result of voice recognition analysis on the voice signal may comprise information on whether the voice signal comprises the call word.

The home appliance 200 may be configured to receive the analysis result from the voice recognition server system 100, and, if the analysis result shows that the voice signal is not the call word, the home appliance 200 may be configured to return to the call word waiting state S2020, and, if the analysis result shows that the voice signal is the call word, the home appliance 200 may be configured to set the command waiting state S2080.

If the received analytic result information comprises information indicating that the voice signal comprises the call word in S2070, the controller 240 may be configured to perform control to set the command standby mode for a preset period of time to receive a user's voice command input in S2080.

On contrary, if the received analytic result information comprises information indicating that the voice signal does not comprise the call word in S2070, the controller 240 may be configured to perform control to return to the wake-up signal standby mode S2020.

According to this embodiment, after recognizing a call word, the home appliance 200 does not immediately set the command waiting state S2080 but instead performs analysis once again by transmitting the input command to the voice recognition server system 100 in S2050. In this manner, false recognition may be significantly reduced.

The voice recognition server system 100 may gather audio sources, which are determined to be call words, so as to periodically update a call word determination algorithm in the voice server 110.

Accordingly, the voice recognition server system 100 may be configured to improve call word recognition performance continuously, and therefore, it is possible to secure a product's stability even without updating a call word determination algorithm in the home appliance 200.

In addition, as the call word recognition performance keeps improving, a user may feel and experience the improved recognition performance.

Then, as described above FIG. 15, if a voice command is received via the audio input unit 220 in S1527, the controller 240 may be configured to control the communication unit 270 to transmit voice data, including the voice command, to the voice recognition server system 100 in S1530.

In some implementations, in the case in that a voice command is received via the audio input unit 220 in S1527, if a voice command received for the preset period of time corresponds to a pre-stored keyword command, the controller 240 may be configured to perform control to perform an operation corresponding to the keyword command. In addition, if a voice command received for the preset period of time does not correspond to a pre-stored keyword command, the controller 240 may be configured to perform a control to transmit voice data, including the voice command, to the voice recognition server system 100.

That is, the home appliance 200 according to an embodiment of the present invention may autonomously respond to a keyword command, including a simple keyword, and may support voice control through natural language processing by use of the voice recognition server system 100. The keyword command may indicate a voice command including a specific keyword for controlling the home appliance 200.

For example, in the case in that the home appliance 200 is the air conditioner 200a, a keyword command may comprise: a keyword corresponding to an exact operation name, for example, "Turn on air purification", "Turn off air purification", "Turn on energy-saving cooling", "Turn off energy-saving cooling", "Turn on energy-saving dehumidification", "Turn off energy-saving dehumidification", "Power on", and "Power off"; and an operation intent keyword. The operation intent keyword may comprise "On", "Off", etc.

In addition, a keyword command may comprise a command for requesting state information of the home appliance 200, for example, "consumption of electricity", "current state", and "operation state".

In addition, in some implementations, a keyword command may be composed of keywords corresponding to an accurate name of a specific operation mode, for example, "air purification", "energy-saving cooling", and "energy-saving dehumidification."

Meanwhile, if a voice command is not received within a preset period of time in a command standby mode, the controller 240 may be configured to perform control to switch to the wake-up signal standby mode.

Meanwhile, if a control signal based on the voice command is received from the voice recognition server system 100, the controller 240 may be configured to perform control to operate in accordance with the control signal.

Meanwhile, the voice server 110 and the voice recognition server system 100 including the voice server 110 may be configured to recognize and process voice data, including a voice command, received from the home appliance 200, as described above with reference to FIGS. 1 to 9.

If receiving a control signal based on the voice command in S1540, the communication unit 270 may be configured to control the home appliance 200 to operate in response to the received control signal in S1545.

In addition, if the communication unit 270 receives a response signal based on the voice command from the voice server 110 in S1550, the controller 240 may be configured to control the audio output unit 291 to output an audible guidance message corresponding to the received response signal in S1570.

In some implementations, if the response signal does not comprise voice data in S1560, the controller 240 may be configured to perform control to receive voice data from the voice server 110 in S1565 and to receive the requested voice data from the voice server 110.

Meanwhile, according to a voice recognition result, the controller 240 may be configured to receive a signal corresponding to a failure of voice recognition from the voice server 110 via the communication unit 270. In this case, the controller 240 may be configured to control the audio output unit 291 to output an audible guidance message for requesting re-inputting of a voice command and to switch the operation mode to the command standby mode.

In addition, according to determination as to whether the determined voice command is supported, the controller 240 may be configured to receive a signal, which indicates that the voice command is about an unsupported function, from the voice server 110 via the communication unit 270 in S1535. In this case, the controller 240 may be configured to control the audio output unit 291 to output an audible guidance message for notifying that the voice command is about an unsupported function in S1537.

In this case, the controller 240 may be configured to control the operation mode to switch to the wake-up signal standby mode. Alternatively, the controller 240 may be configured to control the operation mode to switch to the command standby mode again.

FIG. 21 is a diagram illustrating a signal flow in a home appliance 200 and a voice recognition server system according to an embodiment of the present invention.

Referring to FIG. 21, the home appliance 200 according to an embodiment of the present invention may be configured to enable a voice recognition function in S2101, and to set a wake-up signal standby mode for receiving a wake-up voice signal including a preset call word in S2102.

If a voice signal including a preset call word, such as "LG Whisen" and "LG Dios" is received via the audio input unit 220, the home appliance 200 may be configured to transmit the received voice signal to the voice recognition server system 100 in S2014.

The voice recognition server system 100 may be configured to perform a voice recognition process on the received voice signal so as to determine whether the voice signal comprises a call word in S2105.

If the voice signal is received from the home appliance 200 in S2104, the voice server 110 of the voice recognition server system 100 may be configured to perform a voice recognition process so as to determine whether the voice signal comprises a call word in S2105.

In addition, the voice recognition server system 100 may be configured to transmit, to the home appliance 200, analysis result information which comprises information as to whether the voice signal comprises a call word.

If a result of the voice recognition analysis of the voice recognition server system 100 shows that the voice signal comprises a call word, the home appliance 200 may switch to the command standby mode for receiving a user's voice command in S2111.

Meanwhile, if a voice command is received in the command standby mode S2111 in S2112, the controller 240 may be configured to perform control to transmit voice data, including the received voice command, to the voice server 110 in S2113.

If the voice command including the voice command is received from the home appliance 200 in S2113, the voice server 110 performs natural language processing to analyze the user's intent and determine the voice command in S2114.

The voice recognition server system 100 may be configured to perform an operation corresponding to the determined voice command.

For example, the voice recognition server system 100 may be configured to transmit a response signal based on the determined voice command, a control signal, and the like to the home appliance 200 in S2115.

Meanwhile, upon receiving the response signal based on the determined voice command, the control signal, and the like the home appliance 200 may be configured to output an audible guidance message corresponding to a processing result, and perform a corresponding operation in S2120.

Meanwhile, the voice server 110 of the voice recognition server system 100 may be configured to gather audio files, which are determined to call words, so as to periodically update a call word determination algorithm in the voice server 110.

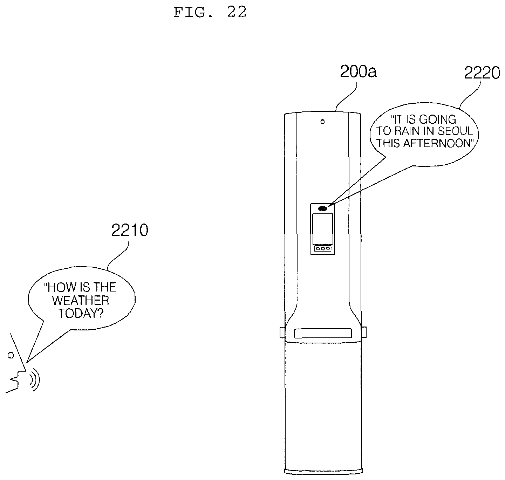

FIGS. 22 to 24 are diagrams for explaining various operations of a voice recognition server system and the home appliance 200 according to an embodiment of the present invention.

Referring to FIG. 22, a user may be configured to input a voice command 2210 in the form of a natural language, for example, "How is the weather today?". Upon receiving the user's voice command 2620 via the microphone 221 or 222, the air conditioner 200a may be configured to transmit the voice command 2210 to the voice recognition server system 100.

The voice recognition server system 100 may be configured to analyze the received voice command 2210 to determine the intent of the user who wants weather information. In addition, if the determined voice command is not about the home appliance 200, the voice recognition server system 100 may be configured to communicate with an external service 121 to perform a corresponding operation.

The voice recognition server system 100 may be configured to access an external service or an Internet network, which provides weather information, to request and receive the weather information.

In addition, the voice recognition server system 100 may be configured to transmit data based on the received weather information to the home appliance 200.

Based on the received data, the air conditioner 200a may be configured to output an audible guidance message 2220 including weather information, for example, "It is going to rain in Seoul this afternoon."

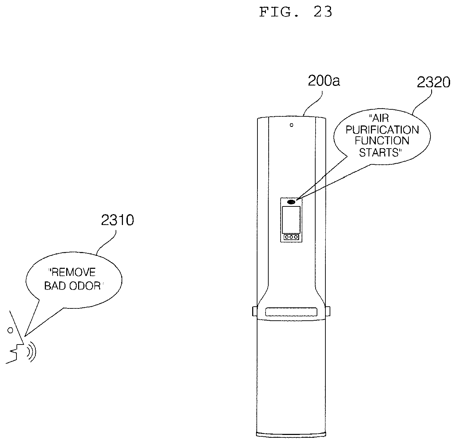

Referring to FIG. 23, a user may be configured to input a voice command 2310 in the form of a natural language "Remove bad odor." Upon receiving the user's voice command 2310 via the microphone 221 or 222, the air conditioner 200a may be configured to transmit the voice command to the voice recognition server system 100.

The voice recognition server system 100 may be configured to analyze the received voice command 2310 so as to determine the intent of the user who wishes an air purification function. Accordingly, the voice recognition server system 100 may be configured to transmit, to the air conditioner 200a, a control signal for executing an air purification function and a response signal corresponding to a corresponding operation.

The air conditioner 200a may be configured to execute the air purification function and output an audible guidance message 2320 such as "Air purification function starts."

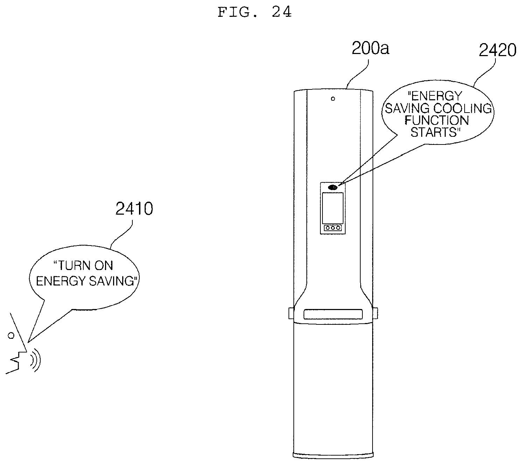

Referring to FIG. 24, a user may be configured to input a voice command 2410 in the form of a natural language, such as "Turn on energy saving function." Upon receiving the voice command 2410 via the microphone 221 or 222, the air conditioner 200a may be configured to transmit the voice command 2410 to the voice recognition server system 100.

The voice recognition server system 100 may be configured to analyze the received voice command 2410 so as to determine the intent of the user who wishes an energy saving function. Accordingly, the voice recognition server system 100 may be configured to transmit, to the air conditioner 200a, a control signal for executing the energy saving function and a response signal corresponding to a corresponding operation.

The air conditioner 200a may be configured to execute the energy saving mode and to output an audible guidance message 2420, such as "Energy saving function starts."

FIG. 25 is a block diagram illustrating another example of the home appliance 200 according to an embodiment of the present invention.

Referring to FIG. 25, the home appliance 200 may comprise: a camera 210; an audio input unit 220 configured to receive a user's voice command; a manipulation unit 230; a memory 250 configured to store various data; a communication unit 270 configured to communicate with another electronic device; a driving unit 280 configured to perform an operation implemented in each home appliance; a display 292 configured to display specific information in the form of an image; an audio output unit 291 configured to output specific information in the form of sound; a controller 240 configured to control overall operations; and a processor 260.

The internal block diagram of the home appliance 200 shown in FIG. 11 is similar to the example of FIG. 5. However, the home appliance 200 further comprises the processor 260, and the audio input unit 220, the audio output unit 291, the communication unit 270, the camera 210, and the processor 260 are provided in a voice recognition module 205 which is a single module.

Meanwhile, the processor 260 may be configured to control the audio input unit 220, the audio output unit 291, the communication unit 270, the camera 210, etc.

Hereinafter, the differences from the home appliance 200 shown in FIG. 11 will be mainly described.

The processor 260 may be configured to process a user's voice input signal received via the audio input unit 220, and to perform a voice recognition process.

For example, when a wake-up voice signal including a preset call word is received, the processor 260 may be switched into a state for receiving a voice command. In this case, the processor 260 performs a voice recognition process of up to receiving a call word voice, and following steps for voice recognition on the user's voice input may be performed by the voice recognition server system 100.

The processor 260 may be configured to perform a control operation to transmit the user's voice command, which is received after recognition of the wake-up voice signal, to the voice recognition server system 100 via the communication unit 270.

In addition, the processor 260 may be configured to transmit state information of the home appliance 200, the user's voice command, etc. to the voice recognition server system 100 via the communication unit 270.

Meanwhile, when a control signal is received via the communication unit 270, the processor 260 may be configured to transmit the control signal to the controller 240 and the controller 240 may be configured to control the home appliance 200 to operate in accordance with the received control signal.

As a result, it is possible to acquire voice data, communicate with the server system, and to output corresponding sound using the voice recognition module 205.

Meanwhile, the voice recognition module 205 may be attached to any of various electronic devices, apart from the home appliance 200 shown in FIG. 2. Alternatively, the voice recognition module 205 may be used as an additional device not attached to another electronic device.

FIG. 26 is an internal block diagram of the driving unit shown in FIGS. 11 and 25.

Meanwhile, the driving unit 280 descried with reference to FIG. 11 or 25 may include a motor driving unit, and the driving unit 280 may be hereinafter referred to as a motor driving device.

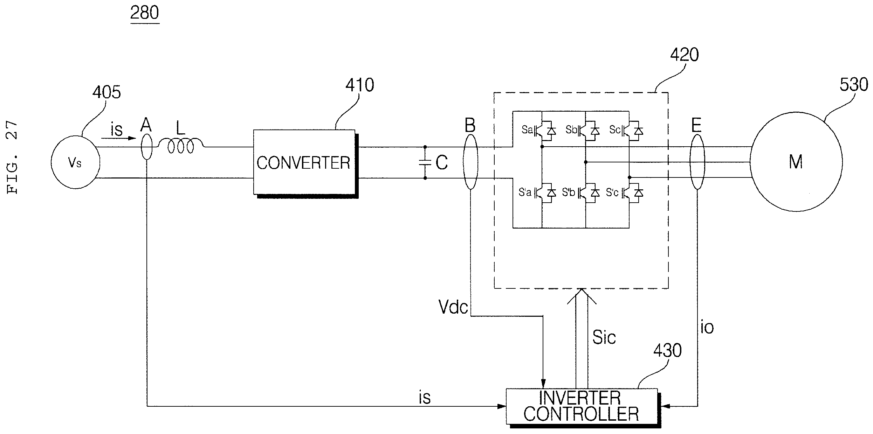

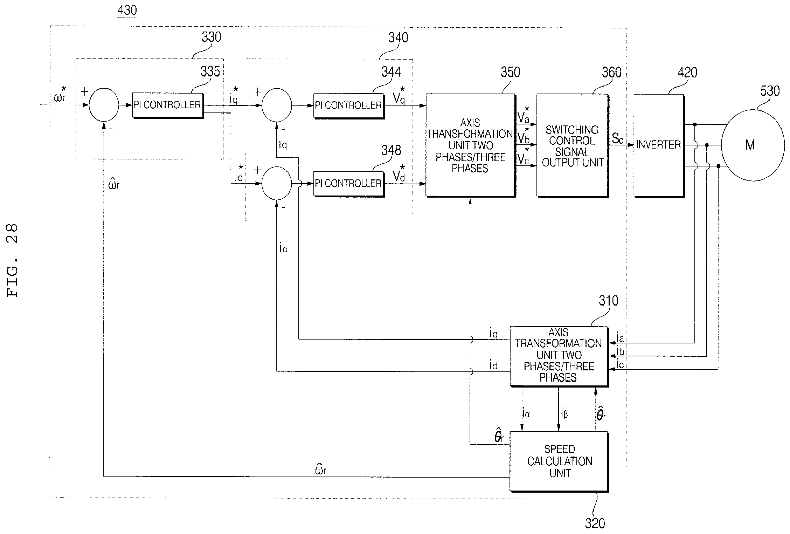

FIG. 27 is an example of an internal circuit example of a motor driving device shown in FIG. 26, and FIG. 28 is an internal block diagram of an inverter controller shown in FIG. 27.

Referring to the drawings, the motor driving device 280 according to an embodiment of the present invention is used to drive a motor in a sensorless method, and the motor driving device may comprise an inverter 420 and the inverter controller 430.

In addition, the motor driving device 280 according to an embodiment of the present invention may further comprise a converter 410, a DC terminal voltage detector B, a smoothing capacitor C, and an output current detector E. The driver 220 may further comprise an input current detector A and a reactor L.

Hereinafter, each unit of the motor driving device shown in FIGS. 26 and 27 will be described.

The reactor L is provided between a commercial AC power supply 405 vs and the converter 410 and performs power factor correction and voltage boosting. In addition, the reactor L may be configured to execute a function of limiting harmonic current according to fast switching of the converter 401.

The input current detector A may be configured to detect input current is supplied from the commercial AC power supply 405. For example, a current transformer (CT), shunt resistor and the like may be used as the input current detector A. The detected input current is a discrete signal in a pulse form and may be applied to the inverter controller 430.

The converter 410 converts a commercial AC voltage, which is supplied from the commercial AC power supply 405 and passes through the reactor L, into a DC voltage. While the commercial AC power supply 405 is shown as a single-phase AC power supply in the drawing, the commercial AC power supply may be a three-phase AC power supply. The internal configuration of the converter 410 depends on the type of the commercial AC power supply 405.

Meanwhile, the converter 410 may be configured in the form of a diode without a switching element so as to perform a rectification operation without a switching operation.

For example, four diodes in a bridge form may be used for the single-phase AC power supply and six diodes in a bridge form can be used for the three-phase AC power supply.

Meanwhile, a half bridge type converter having two switching elements and four diodes may be used as the converter 410. In the case of the three-phase AC power supply, six switching elements and six diodes may be used.

When the converter 410 comprises switching elements, voltage boosting operation, power factor improvement and DC voltage conversion can be performed according to switching operations of the switching elements.

The smoothing capacitor C may be referred to as a DC terminal capacitor, and the smoothing capacitor C smoothes and stores the voltage input thereto. Although one element is shown as the smoothing capacitor C in the drawing, a plurality of elements may be provided to secure element stability.

Meanwhile, although the smoothing capacitor C is shown as being connected to the output terminal of the converter 410 in the drawing, the present disclosure is not limited thereto and a DC voltage may be directly input to the smoothing capacitor C. For example, a DC voltage from a solar cell can be directly input to the smoothing capacitor C or converted into a DC voltage and applied to the smoothing capacitor C. The following description is based on the part illustrated in the drawing.

Because the DC voltage is applied across both terminals of the smoothing capacitor C, the terminals may be referred to as DC terminals or DC link terminals.

The DC terminal voltage detector B may detect a DC terminal voltage Vdc applied across both terminals of the smoothing capacitor C. The DC terminal voltage detector B may comprise a resistor, an amplifier and the like. The detected DC terminal voltage Vdc is a discrete signal in a pulse form and may be applied to the inverter controller 430.

The inverter 420 may comprise a plurality of inverter switching elements, convert a DC voltage Vdc smoothed by on/off operations of the switching elements into three-phase AC voltages Va, Vb and Vc at predetermined frequencies and output the three-phase AC voltages to a three-phase synchronous motor 230.

The inverter 420 is constructed in such a manner that serially connected upper switching elements Sa, Sb and Sc and serially connected lower switching elements S' a, S' b and S' c are respectively paired such that three pairs of upper and lower switching elements Sa&S' a, Sb&S' b and Sc&S' c are connected in parallel.

In addition, diodes are connected in reverse parallel with the switching elements Sa, S' a, Sb, S' b, Sc and S' c.

The switching elements comprised in the inverter 420 are switched on/off based on an inverter switching control signal Sic from the inverter controller 430. Accordingly, the three-phase AC voltages having predetermined frequencies are output to the three-phase synchronous motor 230.

The inverter controller 430 may control switching operation of the inverter 420 sensorlessly. To this end, the inverter controller 430 may receive an output current io detected by the output current detector E.

The inverter controller 430 outputs the inverter switching control signal Sic to the inverter 420 in order to control switching operation of the inverter 420. The inverter switching control signal Sic is a pulse width modulation (PWM) switching control signal and is generated on the basis of the output current io detected by the output current detector E. Outputting of the inverter switching control signal Sic of the inverter controller 430 will be described in detail with reference to FIG. 30.

The output current detector E detects the output current io flowing between the inverter 420 and the three-phase synchronous motor 230. The output current detector E detects current flowing through the motor 230. The output current detector E may detect output currents ia, ib and ic of three phases or detect output currents of two phases using three phase equilibrium.

The output current detector E may be provided between the inverter 420 and the motor 230, and a current transformer (CT), a shunt resistor and the like may be used to detect a current.

When the shunt resistor is used, three shunt resistors may be provided between the inverter 420 and the synchronous motor 230 or one terminal of each shunt resistor may be connected to each of the three lower switching elements S' a, S' b and S' c of the inverter 420. Meanwhile, two shunt resistors may be employed using three phase equilibrium.

Meanwhile, when one shunt resistor is used, the shunt resistor may be provided between the capacitor C and the inverter 420.

The detected output current io is a discrete signal in a pulse form and may be applied to the inverter controller 430. The inverter switching control signal Sic is generated on the basis of the detected output current io. The output currents ia, ib and ic of three phases are collectively referred to as the detected output current io.

The three-phase motor 230 comprises a stator and a rotor. An AC voltage of each phase at a predetermined frequency is applied to a coil of the stator of each phase a, b or c such that the rotor rotates.

For example, the motor 230 may comprise a surface-mounted permanent-magnet synchronous motor (SMPMSM), an interior permanent magnet synchronous motor (IPMSM), a synchronous reluctance motor (Synrm) and the like. The SMPMSM and IPMSM are permanent magnet synchronous motors (PMSMs) employing a permanent magnet and the Synrm has no permanent magnet.

Referring to FIG. 28, the inverter controller 430 may comprise an axis transformation unit 310, a speed calculation unit 320, a current command generator 330, a voltage command generator 340, an axis transformation unit 350, a switching control signal output unit 360.

The axis transformation unit 310 receives the output currents ia, ib and ic of three phases, detected by the output current detector E, and converts the output currents ia, ib and ic of three phases into two-phase currents iα and iβ in a stationary reference frame.

Meanwhile, the axis transformation unit 310 may convert the two-phase currents iα and iβ in the stationary reference frame into two-phase currents iα and iβ in a rotating reference frame.

The speed calculation unit 320 may output a calculated position *θ̂ᵣ* and a calculated speed ω̂*ᵣ* on the basis of the two-phase currents iα and iβ in the stationary reference frame, converted by the axis transformation unit 310.

The current command generator 330 generates a current command value i_{*q} on the basis of the calculated speed ω̂*ᵣ* and a speed command value ω*ᵣ. For example, the current command generator 330 can perform PI control in a PI controller 335 on the basis of a difference between the calculated speed ω̂*ᵣ* and the speed command value ω*r to generate the current command value i*q. Although the q-axis current command value i*q is exemplified as the current command value in the drawing, a d-axis current command value i*d may be generated along with the q-axis current command value i*q. The d-axis current command value i*d may be set to 0.

The current command generator 330 may further include a limiter (not shown) that limits the level of the current command value i*q such that the level does not exceed an allowable range.

The voltage command generator 340 generates d-axis and q-axis voltage command values v*d and v*q on the basis of the d-axis and q-axis currents id and iq, which are transformed into the two-phase rotating reference frame by the axis transformation unit, and the current command values i*d and i*q generated by the current command generator 330. For example, the voltage command generator 340 can perform PI control in a PI controller 344 on the basis of a difference between the q-axis current iq and the q-axis current command value i*q and generate the q-axis voltage command value v*q. In addition, the voltage command generator 340 may perform PI control in a PI controller 348 on the basis of a difference between the d-axis current id and the d-axis current command value i*d and generate the d-axis voltage command value v*d. The voltage command generator 340 may further include a limiter (not shown) that limits the levels of the d-axis and a-axis voltage command values v*d and v*q such that the levels do not exceed allowable ranges.

Meanwhile, the generated d-axis and q-axis voltage command values (v*d, v*q) are applied to the axis transformation unit 350.

The axis transformation unit 350 receives the position *θ̂ᵣ* calculated in the speed calculation unit 320 and the d-axis and q-axis voltage command values v*d and v*q and performs axis transformation.

The axis transformation unit 350 transforms the two-phase rotating reference frame into a two-phase stationary reference frame. The position *θ̂ᵣ* calculated in the speed calculation unit 320 may be used.

In addition, the axis transformation unit 350 transforms the two-phase stationary reference frame into a three-phase stationary reference frame. The axis transformation unit 350 outputs three-phase output voltage command values v*a, v*b, and v*c through such transformation.

The switching control signal output unit 360 generates the PWM inverter switching control signal Sic on the basis of the three-phase output voltage command values v*a, v*b and v*c.

The inverter switching control signal Sic output from the switching control signal output unit 360 can be converted into a gate driving signal in a gate driver and applied to a gate of each switching element comprised in the inverter 420. Accordingly, the switching elements Sa, S' a, Sb, S' b, Sc and S' c in the inverter 420 perform switching operations.

According to at least one of the embodiments of the present invention, the home appliance 200 operates in accordance with a voice input so that a user does not need to manipulate a remote controller, thereby improving user convenience.

In addition, according to at least one of the embodiments of the present invention, natural language may be recognized and processed efficiently.

Furthermore, according to at least one of the embodiments of the present invention, the probability of false recognition occurring during a voice recognition process and the home appliance control process may be minimized, thereby minimizing user inconvenience and improving reliability.

The voice server, the voice recognition server system, and the home appliance 200 according to the present invention are not limited to the configurations and methods of the above embodiments, and the embodiments may vary as all or some of the embodiments are selectively combined.

The method for operating a voice server, a voice recognition server system, and a home appliance 200 according to the present invention may be implemented as code that can be written on a computer-readable medium in which a program is recorded and thus read by a computer. The computer-readable medium comprises all kinds of recording devices in which data is stored in a computer-readable manner. Examples of the computer-readable recording medium may comprise a hard disk drive (HDD), a solid state disk (SSD), a silicon disk drive (SDD), a read only memory (ROM), a random access memory (RAM), a compact disk read only memory (CD-ROM), a magnetic tape, a floppy disc, and an optical data storage device. In addition, the computer-readable medium may be implemented as a carrier wave, such as data transmission over the Internet. The computer-readable recording medium can be distributed over a plurality of computer systems connected to a network so that computer-readable code is written thereto and executed therefrom in a decentralized manner.

Although embodiments have been described with reference to a number of illustrative embodiments thereof, it should be understood that numerous other modifications and embodiments can be devised by those skilled in the art that will fall within the scope of the appended claims. More particularly, various variations and modifications are possible in the component parts and/or arrangements of the subject combination arrangement within the scope of the claims. In addition to variations and modifications in the component parts and/or arrangements, alternative uses will also be apparent to those skilled in the art.

## Claims

1. A method for operating a home appliance (200), comprising:
setting a wake-up signal standby mode for receiving a wake-up voice signal comprising a preset call word;
receiving a voice signal via an audio input unit (220) comprising at least one microphone (221, 222);
when the voice signal comprises the call word, transmitting the received voice signal to a voice recognition server system (100);
receiving analysis result information of the voice signal from the voice recognition server system (100); and
when the received analysis result information comprises information indicating that the voice signal comprises the call word, setting a command standby mode for receiving a user's voice command input for a preset period of time,
and further comprising:
when a response signal based on the voice command is received from the voice recognition server system (100), outputting an audible guidance message corresponding to the received response signal, **characterised in that** the received response signal includes voice data comprising an audio file and the audible guidance message is based on the received voice data.

2. The method according to claim 1, wherein, when the received analysis result information comprises information indicating that the voice signal does not comprise the call word, return to the wake-up signal standby mode.

3. The method according to claim 1 or 2, further comprising, when the voice signal does not comprise the call word, returning to the wake-up signal standby mode.

4. The method according to any one of claims 1 to 3, further comprising:
receiving the voice command via the audio input unit (220); and
transmitting voice data, comprising the voice command, to the voice recognition server system (100).

5. The method according to any one of claims 1 to 4, further comprising, when the voice command is not received within the preset period of time, switching to the wake-up signal standby mode.

6. The method according to any one of claims 1 to 5, further comprising, when a control signal based on the voice command is received from the voice recognition server system (100), performing an operation corresponding to the received control signal.

7. The method according to any one of claims 1 to 6, further comprising:
when a signal corresponding to a voice recognition failure is received from the voice recognition server system (100), outputting an audible guidance message to request re-inputting of the voice command; and
switching to the command standby mode.

8. The method according to any one of claims 1 to 7, further comprising, when a signal for notifying that the voice command is about an unsupported function is received from the voice recognition server system (100), outputting an audible guidance message for notifying that the voice command is about the unsupported function.

9. A home appliance (200) comprising:
an audio input unit (220) comprising at least one microphone (221, 222);
a controller (240) configured to process a voice that is input via the audio input unit (220);
an audio output unit (291) configured to output an audio signal; and
a communication unit (270) configured to, when the voice comprises a preset call word, transmit the input voice to a voice recognition server system (100) by a control of the controller (240) and to receive analysis result information of the voice from the voice recognition server system (100),
wherein, when the received analysis result information comprises information indicating that the voice comprises the call word, the controller (240) is configured to perform control to set a command standby mode for receiving a voice command of a user for a preset period of time,
when a response signal based on the voice command is received from the voice recognition server system (100), the controller (240) is configured to control the audio output unit (291) to output an audible guidance message corresponding to the received response signal,
and **characterised in that** the received response signal includes voice data comprising an audio file and the audible guidance message is based on the received voice data.

10. The home appliance (200) according to claim 9, wherein, when the received analysis result information comprises information indicating that the voice does not comprise the call word, the controller (240) is configured to perform control to switch to a wake-up signal standby mode for receiving a wake-up voice signal comprising the preset call word.

11. The home appliance (200) according to claim 9 or 10, further being configured to, when the voice signal does not comprise the call word, switch to the wake-up signal standby mode.

12. The home appliance (200) according to any one of claims 9 to 11, further comprising: a memory (250) configured to store a call word determination algorithm for determining whether the voice signal comprises the call word,
wherein the controller (240) is configured to determine, based on the call word determination algorithm, whether the voice signal comprises the call word.

13. The home appliance (200) according to any one of claims 9 to 12, wherein, when a voice command is received via the audio input unit (220), the controller (240) is configured to control the communication unit (270) to transmit voice data, comprising the voice command, to the voice recognition server system (100).

## Patentansprüche

1. Verfahren zum Betrieb eines Haushaltsgeräts (200), aufweisend:
Setzen eines Aufwachsignal-Bereitschaftsmodus zum Empfangen eines Aufwachsprachsignals, das ein vorab festgesetztes Weckrufwort aufweist;
Empfangen eines Sprachsignals über eine Audioeingabeeinheit (220), die mindestens ein Mikrofon (221, 222) aufweist;
wenn das Sprachsignal das Weckrufwort aufweist, Senden des empfangenen Sprachsignals zu einem Spracherkennungsserversystem (100);
Empfangen von Analyseergebnisinformation des Sprachsignals aus dem Spracherkennungsserversystem (100); und
wenn die empfangene Analyseergebnisinformation Information aufweist, die angibt, dass das Sprachsignal das Weckrufwort aufweist, Setzen eines Befehlsbereitschaftsmodus zum Empfangen einer Sprachbefehlseingabe eines Benutzers für eine vorgegebene Zeitdauer,
und ferner aufweisend:
wenn ein auf den Sprachbefehl basierendes Antwortsignal aus dem Spracherkennungsserversystem (100) empfangen wird, Ausgeben einer dem empfangenen Antwortsignal entsprechenden hörbaren Anleitungsmeldung,
**dadurch gekennzeichnet, dass** das empfangene Antwortsignal Sprachdaten enthält, die eine Audiodatei aufweisen, und die hörbare Anleitungsmeldung auf den empfangenen Sprachdaten basiert.

2. Verfahren nach Anspruch 1, wobei, wenn die empfangene Analyseergebnisinformation Information aufweist, die angibt, dass das Sprachsignal das Weckrufwort nicht aufweist, Zurückkehren in den Aufwachsignal-Bereitschaftsmodus.

3. Verfahren nach Anspruch 1 oder 2, ferner aufweisend: Zurückkehren in den Aufwachsignal-Bereitschaftsmodus, wenn das Sprachsignal das Weckrufwort nicht aufweist.

4. Verfahren nach einem der Ansprüche 1 bis 3, ferner aufweisend:
Empfangen des Sprachbefehls über die Audioeingabeeinheit (220); und
Senden von Sprachdaten, die den Sprachbefehl aufweisen, zu dem Spracherkennungsserversystem (100).

5. Verfahren nach einem der Ansprüche 1 bis 4, ferner aufweisend: Umschalten in den Aufwachsignal-Bereitschaftsmodus, wenn der Sprachbefehl nicht in der vorab festgesetzten Zeitdauer empfangen worden ist.

6. Verfahren nach einem der Ansprüche 1 bis 5, ferner aufweisend: Durchführen eines dem empfangenen Steuersignal entsprechenden Betriebs, wenn ein auf dem Sprachbefehl basierendes Steuersignal aus dem Spracherkennungsserversystem (100) empfangen worden ist.

7. Verfahren nach einem der Ansprüche 1 bis 6, ferner aufweisend:
Ausgeben einer hörbaren Anleitungsmeldung, um eine erneute Eingabe des Sprachbefehls anzufordern, wenn ein Signal, das einem Spracherkennungsfehler entspricht, aus dem Spracherkennungsserversystem (100) empfangen worden ist; und
Umschalten in den Befehlsbereitschaftsmodus.

8. Verfahren nach einem der Ansprüche 1 bis 7, ferner aufweisend: wenn ein Signal zum Mitteilen, dass der Sprachbefehl eine nicht unterstütze Funktion betrifft, aus dem Spracherkennungsserversystem (100) empfangen worden ist, Ausgeben einer hörbaren Anleitungsmeldung zum Mitteilen, dass der Sprachbefehl eine nicht unterstütze Funktion betrifft.

9. Haushaltsgerät (200) aufweisend:
eine Audioeingabeeinheit (220), die mindestens ein Mikrofon (221, 222) aufweist;
eine Steuerungseinrichtung (240), die konfiguriert ist, ein über die Audioeingabeeinheit (220) eingegebenes Sprachsignal zu verarbeiten;
eine Audioausgabeeinheit (291), die konfiguriert ist, ein Audiosignal auszugeben; und
eine Kommunikationseinheit (270), die konfiguriert ist, um
wenn das Gesprochene ein vorab festgesetztes Weckrufwort aufweist, das eingegebene Gesprochene auf eine von der Steuerungseinrichtung (240) gesteuerte Weise zu einem Spracherkennungsserversystems (100) zu senden und Analyseergebnisinformation des Gesprochenen aus dem Spracherkennungsserversystem (100) zu empfangen,
wobei, wenn die empfangene Analyseergebnisinformation Information aufweist, die angibt, dass das Gesprochene das Weckrufwort aufweist, die Steuerungseinrichtung (240) konfiguriert ist, eine Steuerung durchzuführen, um einen Befehlsbereitschaftsmodus zum Empfangen eines Sprachbefehls eines Benutzers für eine vorgegebene Zeitdauer zu setzen,
wenn ein auf den Sprachbefehl basierendes Antwortsignal aus dem Spracherkennungsserversystem (100) empfangen wird, die Steuerungseinrichtung (240) konfiguriert ist, die Audioausgabeeinheit (291) zu steuern, eine dem empfangenen Antwortsignal entsprechende hörbare Anleitungsmeldung auszugeben,
und **dadurch gekennzeichnet, dass** das empfangene Antwortsignal Sprachdaten enthält, die eine Audiodatei aufweisen, und die hörbare Anleitungsmeldung auf den empfangenen Sprachdaten basiert.

10. Haushaltsgerät (200) nach Anspruch 9, wobei, wenn die empfangene Analyseergebnisinformation Information aufweist, die angibt, dass das Gesprochene das Weckrufwort nicht aufweist, die Steuerungseinrichtung (240) konfiguriert ist, eine Steuerung durchzuführen, um in den Aufwachsignal-Bereitschaftsmodus zum Empfangen eines Aufwachsprachsignals, das das vorab gesetzte Weckrufwort aufweist, umzuschalten.

11. Haushaltsgerät (200) nach Anspruch 9 oder 10, das ferner konfiguriert ist, in den Aufwachsignal-Bereitschaftsmodus umzuschalten, wenn das Sprachsignal das Weckrufwort nicht aufweist.

12. Haushaltsgerät (200) nach einem der Ansprüche 9 bis 11, ferner aufweisend: einen Speicher (250), der konfiguriert ist, einen Weckruf-Bestimmungsalgorithmus zum Bestimmen, ob das Sprachsignal das Weckrufwort aufweist, zu speichern,
wobei die Steuerungseinrichtung (240) konfiguriert ist, auf Basis des Weckruf-Bestimmungsalgorithmus zu bestimmen, ob das Sprachsignal das Weckrufwort aufweist.

13. Haushaltsgerät (200) nach einem der Ansprüche 9 bis 12, wobei, wenn ein Sprachbefehl über die Audioeingabeeinheit (220) empfangen worden ist, die Steuerungseinrichtung (240) konfiguriert ist, die Kommunikationseinheit (270) zu steuern, Sprachdaten, die den Sprachbefehl aufweisen, zu dem Spracherkennungsserversystem (100) zu senden.

## Revendications

1. Procédé de fonctionnement d'un appareil ménager (200), comprenant:
définir un mode de veille de signal de réveil pour recevoir un signal vocal de réveil comprenant un mot d'appel prédéfini ;
recevoir un signal vocal par l'intermédiaire d'une unité d'entrée audio (220) comprenant au moins un microphone (221, 222) ;
lorsque le signal vocal comprend le mot d'appel, transmettre le signal vocal reçu à un système de serveur de reconnaissance vocale (100) ;
recevoir des informations de résultat d'analyse du signal vocal en provenance du système de serveur de reconnaissance vocale (100) ; et
lorsque les informations de résultat d'analyse reçues comprennent des informations indiquant que le signal vocal comprend le mot d'appel, définir un mode de veille d'instruction pour recevoir une entrée d'instruction vocale de l'utilisateur pendant une période de temps prédéfinie ; et
comprenant en outre :
lorsqu'un signal de réponse basé sur l'instruction vocale est reçu en provenance du système de serveur de reconnaissance vocale (100), fournir en sortie un message de guidage audible correspondant au signal de réponse reçu ;
**caractérisé en ce que**
le signal de réponse reçu inclut des données vocales comprenant un fichier audio, et le message de guidage audible est basé sur les données vocales reçues.

2. Procédé selon la revendication 1, dans lequel, lorsque les informations de résultat d'analyse reçues comprennent des informations indiquant que le signal vocal ne comprend pas le mot d'appel, le procédé comprend l'étape consistant à revenir au mode de veille de signal de réveil.

3. Procédé selon la revendication 1 ou 2, comprenant en outre, lorsque le signal vocal ne comprend pas le mot d'appel, revenir au mode de veille de signal de réveil.

4. Procédé selon l'une quelconque des revendications 1 à 3, comprenant en outre :
recevoir l'instruction vocale par l'intermédiaire de l'unité d'entrée audio (220) ; et
transmettre des données vocales, comprenant l'instruction vocale, au système de serveur de reconnaissance vocale (100).

5. Procédé selon l'une quelconque des revendications 1 à 4, comprenant en outre, lorsque l'instruction vocale n'est pas reçue au cours de la période de temps prédéfinie, commuter sur le mode de veille de signal de réveil.

6. Procédé selon l'une quelconque des revendications 1 à 5, comprenant en outre, lorsqu'un signal de commande basé sur l'instruction vocale est reçu en provenance du système de serveur de reconnaissance vocale (100), mettre en œuvre une opération correspondant au signal de commande reçu.

7. Procédé selon l'une quelconque des revendications 1 à 6, comprenant en outre :
lorsqu'un signal correspondant à une défaillance de reconnaissance vocale est reçu en provenance du système de serveur de reconnaissance vocale (100), fournir en sortie un message de guidage audible pour demander un nouvelle application en entrée de l'instruction vocale ; et
commuter sur le mode de veille d'instruction.

8. Procédé selon l'une quelconque des revendications 1 à 7, comprenant en outre, lorsqu'un signal pour notifier que l'instruction vocale concerne une fonction non prise en charge est reçu en provenance du système de serveur de reconnaissance vocale (100), fournir en sortie un message de guidage audible pour notifier que l'instruction vocale concerne la fonction non prise en charge.

9. Appareil ménager (200) comprenant :
une unité d'entrée audio (220) comprenant au moins un microphone (221, 222) ;
un contrôleur (240) configuré de manière à traiter une voix qui est appliquée en entrée par l'intermédiaire de l'unité d'entrée audio (220) ;
une unité de sortie audio (291) configurée de manière à fournir en sortie un signal audio ; et
une unité de communication (270) configurée de manière à, lorsque la voix comprend un mot d'appel prédéfini, transmettre la voix d'entrée à un système de serveur de reconnaissance vocale (100), par le biais d'une commande du contrôleur (240), et recevoir des informations de résultat d'analyse de la voix en provenance du système de serveur de reconnaissance vocale (100) ;
dans lequel, lorsque les informations de résultat d'analyse reçues comprennent des informations indiquant que la voix comprend le mot d'appel, le contrôleur (240) est configuré de manière à mettre en œuvre une commande afin de définir un mode de veille d'instruction pour recevoir une instruction vocale d'un utilisateur pendant une période de temps prédéfinie ;
lorsqu'un signal de réponse basé sur l'instruction vocale est reçu en provenance du système de serveur de reconnaissance vocale (100), le contrôleur (240) est configuré de manière à commander, à l'unité de sortie audio (291), de fournir en sortie un message de guidage audible correspondant au signal de réponse reçu ; et
**caractérisé en ce que** :
le signal de réponse reçu inclut des données vocales comprenant un fichier audio, et le message de guidage audible est basé sur les données vocales reçues.

10. Appareil ménager (200) selon la revendication 9, dans lequel, lorsque les informations de résultat d'analyse reçues comprennent des informations indiquant que la voix ne comprend pas le mot d'appel, le contrôleur (240) est configuré de manière à mettre en œuvre une commande en vue de commuter sur un mode de veille de signal de réveil en vue de recevoir un signal vocal de réveil comprenant le mot d'appel prédéfini.

11. Appareil ménager (200) selon la revendication 9 ou 10, en outre configuré de manière à commuter sur le mode de veille de signal de réveil lorsque le signal vocal ne comprend pas le mot d'appel.

12. Appareil ménager (200) selon l'une quelconque des revendications 9 à 11, comprenant en outre : une mémoire (250) configurée de manière à stocker un algorithme de détermination de mot d'appel pour déterminer si le signal vocal comprend le mot d'appel ;
dans lequel le contrôleur (240) est configuré de manière à déterminer, sur la base de l'algorithme de détermination de mot d'appel, si le signal vocal comprend le mot d'appel.

13. Appareil ménager (200) selon l'une quelconque des revendications 9 à 12, dans lequel, lorsqu'une instruction vocale est reçue par l'intermédiaire de l'unité d'entrée audio (220), le contrôleur (240) est configuré de manière à commander, à l'unité de communication (270), de transmettre des données vocales, comprenant l'instruction vocale, au système de serveur de reconnaissance vocale (100).
